(19) Europäisches Patentamt / European Patent Office / Office européen des brevets

(11) **EP 1 861 444 B2**

(12) **NEUE EUROPÄISCHE PATENTSCHRIFT**
Nach dem Einspruchsverfahren

(45) Veröffentlichungstag und Bekanntmachung des Hinweises auf die Entscheidung über den Einspruch:
**01.01.2014 Patentblatt 2014/01**

(45) Hinweis auf die Patenterteilung:
**11.11.2009 Patentblatt 2009/46**

(21) Anmeldenummer: **06708694.2**

(22) Anmeldetag: **08.03.2006**

(51) Int Cl.:
**C08G 18/12** (2006.01)   **C08G 18/48** (2006.01)

(86) Internationale Anmeldenummer:
**PCT/EP2006/060566**

(87) Internationale Veröffentlichungsnummer:
**WO 2006/094998 (14.09.2006 Gazette 2006/37)**

(54) **PREPOLYMERE UND DARAUS HERGESTELLTE ZELLIGE POLYISOCYANAT-POLYADDITIONSPRODUKTE**

PREPOLYMERS AND CELLULAR POLYISOCYANATE POLYADDITION PRODUCTS PRODUCED THEREFROM

PREPOLYMERES ET PRODUITS DE POLYADDITION DE POLYISOCYANATES CELLULAIRES OBTENUS A PARTIR DESDITS PREPOLYMERES

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **11.03.2005 DE 102005011784**

(43) Veröffentlichungstag der Anmeldung:
**05.12.2007 Patentblatt 2007/49**

(73) Patentinhaber: **BASF SE**
**67056 Ludwigshafen (DE)**

(72) Erfinder:
• **MARTEN, Elke**
  **49179 Ostercappeln (DE)**
• **WEIGELT, Elke**
  **49080 Osnabrück (DE)**
• **HUPRIKAR, Anand G.**
  **Novi, MI 48375 (US)**
• **STRAUSS, Michael**
  **49448 Lemförde (DE)**

(56) Entgegenhaltungen:
**EP-A- 0 449 331    EP-A- 0 601 383**
**EP-A- 1 367 072    EP-A- 1 367 076**
**WO-A-91/17197**

EP 1 861 444 B2

**Beschreibung**

Die Erfindung bezieht sich auf Prepolymer mit einem NCO-Gehalt kleiner 10 %, bevorzugt zwischen 2 % und 8 %, besonders bevorzugt zwischen 4 % und 7 % basierend auf der Umsetzung von (a) Diisocyanat, bevorzugt enthaltend 2,2'-, 2,4'- und/oder 4,4'-Diphenylmethandiisocyanat (MDI), mit (b) Polyetheralkohol, bevorzugt mit einer mittleren Funktionalität, bevorzugt tatsächlichen mittleren Funktionalität zwischen 1,7 und 2,7, bevorzugt zwischen 1,7 und 2,1, besonders bevorzugt zwischen 1,9 und 2,1 wobei das (b) Polyetheralkohol enthält (b1) sowie (b2) und (b3) mit den folgenden Bedeutungen für (b1), (b2) und (b3):

(b1) Polytetrahydrofuran mit einem Molekulargewicht zwischen 1800 g/mol und 2100 g/mol, bevorzugt zwischen 1900 g/mol und 2100 g/mol, besonders bevorzugt zwischen 1901 g/mol und 2100 g/mol sowie

(b2) Polyetheralkohol, bevorzugt mit einer nominellen Funktionalität von 3, mit einem Molekulargewicht zwischen 500 g/mol und 7000 g/mol auf der Basis von Ethylenoxid und/oder und/oder Propylenoxid und Hydroxylzahl < 500. und

(b3) Polytetrahydrofuran mit einem Molekulargewicht zwischen 800 g/mol und 1200 g/mol, und der Polyetheralkohol (b2) auf Ethylenoxid und/oder Propylenoxid sowie Glycerin und/oder Trimethylolpropan als Startersubstanz basiert.

Des weiteren betrifft die Erfindung Verfahren zur Herstellung von zelligen Polyisocyanat-Polyadditionsprodukten, besonders bevorzugt zelligen Polyurethanelastomeren, die gegebenenfalls Isocyanurat- und/oder Harnstoffstrukturen enthalten können, insbesondere zelligen Polyisocyanat-Polyadditionsprodukten mit einer Dichte nach DIN EN ISO 845 zwischen 200 und 800 kg/m$^3$, bevorzugt zwischen 300 und 600 kg/m$^3$, einer Zugfestigkeit nach DIN EN ISO 1798 von $\geq$ 2,0 N/mm$^2$, bevorzugt $\geq$ 2,5 N/mm$^2$, einer Bruchdehnung nach DIN EN ISO 1798 von $\geq$ 200 %, bevorzugt $\geq$ 350 % und einer Weiterreißfestigkeit nach DIN ISO 34-1 B (b) von $\geq$ 8 N/mm und besonders bevorzugt einem Druckverformungsrest (40 % Verformung: 22 Stunden 80°C und 2 h 23°C) in Anlehnung an DIN EN ISO 1856 von kleiner 40 %, in dem man durch Umsetzung von (a) Diisocyanat, bevorzugt 2,2'-, 2,4'- und/oder 4,4'-Diphenylmethandiisocyanat (MDI), mit (b) Polyetheralkohol, bevorzugt mit einer mittleren Funktionalität, bevorzugt tatsächlichen mittleren Funktionalität zwischen 1,7 und 2,7, bevorzugt zwischen 1,7 und 2,1, ein Isocyanatgruppen aufweisendes Prepolymer mit einem NCO-Gehalt kleiner 10 %, bevorzugt zwischen 2 und 8 %, besonders bevorzugt zwischen 4 % und 7 %, besonders bevorzugt ein Prepolymer gemäß einem der Ansprüche herstellt und dieses Prepolymer anschließend in einer Form mit einer Vernetzerkomponente enthaltend (e) Wasser sowie gegebenenfalls (d) Fettsäuresulfate, bevorzugt zwischen 0,005 bis 1 Gew.-% Fettsäuresulfate, bezogen auf das Gewicht der zelligen Polyisocyanat-Polyadditionsprodukte, umsetzt, wobei man als (b) Polyetheralkohol einsetzt (b1) sowie (b2) und (b3) mit den folgenden Bedeutungen für (b1), (b2) und (b3):

(b1) Polytetrahydrofuran mit einem Molekulargewicht zwischen 1800 g/mol und 2100 g/mol, bevorzugt zwischen 1900 g/mol und 2100 g/mol, besonders bevorzugt zwischen 1901 g/mol und 2100 g/mol sowie

(b2) Polyetheralkohol, bevorzugt mit einer nominellen Funktionalität von 3, mit einem Molekulargewicht zwischen 500 g/mol und 7000 g/mol auf der Basis von Ethylenoxid und/oder Propylenoxid und Hydroxylzahl < 500. und

(b3) Polytetrahydrofuran mit einem Molekulargewicht zwischen 800 g/mol und 1200 g/mol, wobei der Polyetheralkohol (b2) auf Ethylenoxid und/oder Propylenoxid sowie Glicerin und/oder Trimethylolpropan als Startersubstanz basiert.

Außerdem bezieht sich die Erfindung auf derart erhältliche zellige Polyisocyanat-Polyadditionsprodukte, bevorzugt zellige, besonders bevorzugt mikrozellige Polyurethanelastomere, die gegebenenfalls Isocyanurat- und/oder Harnstoffstrukturen enthalten können, insbesondere zylindrische, bevorzugt hohle Formkörper, insbesondere hohle zylindrische Automobilzusatzfeder bevorzugt für Kraftfahrzeugstoßdämpfer, insbesondere bevorzugt Kraftfahrzeugstoßdämpfer enthaltend hohle zylindrische Automobilzusatzfeder.

Zellige, beispielsweise mikrozellige Polyisocyanat-Polyadditionsprodukte, üblicherweise Polyurethane und/oder Polyisocyanurate, die gegebenenfalls Harnstoffstrukturen enthalten können und erhältlich sind durch Umsetzung von Isocyanaten mit gegenüber Isocyanaten reaktiven Verbindungen sowie Verfahren zu ihrer Herstellung sind allgemein bekannt. Eine besondere Ausgestaltung dieser Produkte sind zellige, insbesondere mikrozellige Polyurethanelastomere, die sich von üblichen Polyurethanschaumstoffen durch ihre wesentlich höhere Dichte von üblicherweise 200 bis 800 kg/m$^3$, ihre besonderen physikalischen Eigenschaften und die dadurch bedingten Anwendungsmöglichkeiten unterscheiden. Derartige Polyurethanelastomere finden beispielsweise Anwendung als schwingungs- und stoßdämpfende Elemente, insbesondere im Automobilbau. Die aus Polyurethanelastomeren hergestellten Federungselemente werden in Automobilen beispielsweise innerhalb der Gesamtfederbeinkonstruktion, bestehend aus Stoßdämpfer, Spiralfeder und der Elastomerfeder, auf die Kolbenstange des Stoßdämpfers geschoben.

Produkte, zu deren Herstellung ein Prepolymer mit einem geringen NCO-Gehalt ("full prepolymer") eingesetzt wird, zeichnen sich durch relativ temperaturstabile <u>Harnstoff</u>hartphasen aus. Insbesondere bei hoher dynamischer Belastung (d.h. hohe Kraft und/oder hohe Frequenz) entstehen in den Federn erhöhte Temperaturen (> 80°C). Dabei zeigen Federn mit Harnstoffhartphase im Vergleich zu Produkten mit Urethanhartphase (basierend auf Prepolymeren mit hohem NCO-Gehalt, z.B. NCO= 14-20 % "semi-prepolymer") eine höhere dynamische Performance. Der Aufbau der Harnstoffhartphasen erfolgt bei den zelligen Elastomeren üblicherweise durch die Reaktion von Wasser mit Isocyanat. Die gebildete Carbaminsäure zerfällt in Kohlendioxid und Amin, welches unter Harnstoffbildung mit Isocyanat reagiert.

Polyesterol-haltige Weichphasen führen in den zelligen PUR-Elastomeren mit Harnstoffhartphase zu dem höchsten dynamischen Eigenschaftsniveau. Derartige Produkte sind allgemein bekannt. So beschreibt WO 2001018086 A1 den Einsatz von Polyester-polyetherol (polykondensiert aus Polyoxytetramethylenglykol mit einem mittleren Molekulargewicht von 220 bis 270 g/mol und Adipinsäure) zur Herstellung von zelligen PUR Elastomeren mit guten dynamischen Eigenschaften und hoher Kälteflexibilität. Aufgrund der Esterbindungen ist der resultierende Schaum jedoch hydrolyseempfindlich.

DE-A 3613964 beschreibt die Herstellung von Produkten auf der Basis von reinen Polyester- bzw. Polyesterpolyetherol-Weichphasen. Die im Vergleichsbeispiel in DE-A 3613964 aufgeführten Prüfkörper auf Basis von Polytetrahydrofuran (M=2000 g/mol) als Weichphase wiesen nur eine vergleichsweise geringe Biegebeständigkeit auf (s. Vergleichsbeispiel 3 in Tabelle 1 in DE 3613964).

Aufgabe der Erfindung war es somit, zellige Polyisocyanat-Polyadditionsprodukte, bevorzugt zellige Polyurethanelastomere, bevorzugt solche mit einer Dichte von 200 bis 800, besonders bevorzugt 300 bis 600 kg/m$^3$ zu entwickeln, die dynamisch hoch belastbar (insbesondere mit hervorragenden Zugfestigkeiten, Dehnungen, Weiterreißfestigkeiten und Druckverformungsresten) und kostengünstig sind und eine sehr guter Mikrobenbeständigkeit sowie Hydrolysestabilität aufweisen. Weiterhin sollten die zelligen Polyurethanelastomere eine geringe Wasseraufnahme aufweisen und kälteflexibel sein. Dabei bestand eine besondere Herausforderung darin, auch Bauteile mit starken Hinterschneidungen, wie z.B. Biegelippen von Dämpfungselementen, rissfrei entformen zu können. Die zelligen Polyurethanelastomere sollten insbesondere als Dämpfungselemente, beispielsweise im Automobilbau, verwendet werden können. Des weiteren sollten diese zelligen Polyisocyanat-Polyadditionsprodukte einfach und wirtschaftlich herstellbar sein, insbesondere auf einer gut handhabbaren Prepolymerkomponente basieren. Aufgabe der vorliegenden Erfindung war es somit zudem, ein geeignetes Prepolymer zu entwickeln, mit dem zellige Polyisocyanat-Polyadditionsprodukte erhältlich sind, die die eingangs dargestellten Vorteile und Verbesserungen aufweisen.

Diese Aufgabe konnte durch das eingangs dargestellte Prepolymer gelöst werden.

Das erfindungsgemäße Prepolymer zeichnet sich dadurch aus, dass durch die erfindungsgemäße Polyol-Kombination, d.h. durch den Einsatz von (b1) mit (b3) oder den Einsatz von (b1) mit (b2) und (b3) erhebliche Vorteile in den Verarbeitungseigenschaften einerseits und in den Materialeigenschaften der zelligen Polyurethanelastomere andererseits erzielt werden konnten. Mit dem erfindungsgemäßen Prepolymer konnten sogar Bauteile mit relativ starken Hinterschneidungen nach kurzer Aushärtezeit rissfrei entformt werden. Die zelligen Polyurethanelastomere wiesen gute dynamische Bauteileigenschaften auf und waren hydrolyse- und mikrobenbeständig. Durch Einsatz der erfindungsgemäßen PolyolKombination konnte die durch (b1) verursachte Weichphasenkristallisation verringert werden, was zu einer deutlichen Verbesserung der Kälteflexibilität geführt hat.

Zudem weist das erfindungsgemäße Prepolymer den Vorteil auf, dass es über eine ausgezeichnete Lagerstabilität verfügt und damit erhebliche Vorteile in der Handhabung aufweist. Das erfindungsgemäße Prepolymer kann sogar nach dem Abkühlen auf 0 °C ohne Einbußen bei den Materialeigenschaften wieder aufgeschmolzen und erneut verschäumt werden. Bedingt durch die deutlich niedrigere Schmelztemperatur von MDI im Vergleich zu NDI ($T_m$ (NDI)=127 °C bzw. $T_m$ (MDI)=38 °C) können insbesondere die bevorzugten auf MDI als Isocyanat basierenden Prepolymere nach ihrer Herstellung auf Raumtemperatur abgekühlt und bei Bedarf nach mehrwöchiger Lagerzeit wieder auf die Gebrauchstemperatur von 60 - 90 °C aufgeschmolzen werden. Auch dies ein besonderer Vorteil der erfindungsgemäßen Prepolymere in ihrer Handhabung und Verarbeitung zu den zelligen Polyisocyanat-Polyadditionsprodukten.

Bevorzugt ist ein Prepolymer, bei dem das Gewichtsverhältnis von (b1) zur Summe von (b2) und (b3), zwischen 11:1 und 2:1, besonders bevorzugt zwischen 9:1 und 2:1 beträgt.

Erfindungsgemäß ist ein Prepolymer, bei dem das (b) Polyetheralkohol (b1) und (b2) enthält und das Polyetheralkohol (b2) eine Hydroxylzahl kleiner 500 mg KOH/g, bevorzugt zwischen 16 mg KOH/g und 340 mg KOH/g, besonders bevorzugt zwischen 16 mg KOH/g und 80 mg KOH/g, und eine nominelle Funktionalität von 3 aufweist. Derartige Polyetheralkohole (b2) basieren auf dreifunktionellen Startsubstanzen, die mit Ethylenoxid und/oder Propylenoxid z.B. blockweise oder random, d.h. gemischt alkoxyliert sind.

Als dreifunktionelle Polyetheralkohole (b2) können mit Glycerin und/oder Trimethylolpropan gestartete Polyoxypropylenglykole, Polyoxyethylenglykole und Polyetheralkohole, die Ethylenoxid- und Propylenoxid-Einheiten blockweise oder gemischt aufweisen, eingesetzt werden. Besonders bevorzugt kann in dem Prepolymer als Polyetheralkohol (b2) ein Glycerin gestartetes Polyoxypropylen (bevorzugt bevorzugt zwischen 75 und 90 Gew.-%) - polyoxyethylen (besonders bevorzugt zwischen 10 und 25 Gew.-%) - glykol vorliegen, besonders bevorzugt mit einer Hydroxylzahl zwischen 20 und 60, besonders bevorzugt zwischen 25 mg und 50 KOH/g. Besonders bevorzugt sind ferner als Polyetheralkohol (b2) ein Trimethylolpropan gestartetes Polyoxypropylenglykol oder Polyoxyethylenglykol, besonders bevorzugt mit einer Hydroxylzahl zwischen 100 und 250, besonders bevorzugt zwischen 150 mg und 250 KOH/g.

Erfindungsgemäß wird als (b2) ein 3-funktionelles Polyetheralkohol eingesetzt.

Polytetrahydrofurane (in dieser Schrift auch als PTHF bezeichnet) sind Polyole, die durch kationische Polymerisation aus Tetrahydrofuran hergestellt werden. Polytetrahydrofuran ist allgemein bekannt und in verschiedenen Molekulargewichten bei der BASF Aktiengesellschaft kommerziell erhältlich.

Das Prepolymer kann besonders bevorzugt Allophanatgruppen enthalten.

Diese Allophanate können bei der Prepolymerherstellung durch Reaktionstemperaturen oberhalb 100°C, bevorzugt 120 -150°C aufgebaut werden. Die Prepolymerherstellung kann somit bevorzugt derart erfolgen, dass zu dem auf über 120°C erhitzten vorgelegten Polyetheralkoholen (b) auf eine Temperatur von über 40°C, besonders bevorzugt 50°C erwärmtes MDI gegeben wird.

Besonders bevorzugt basiert das erfindungsgemäße Prepolymer auf der Umsetzung von (a) Diisocyanat mit den erfindungsgemäßen Polyetheralkoholen (b) mit einem Molekulargewicht zwischen 500 g/mol und 7000 g/mol und wobei zusätzlich zu Polyetheralkohol (b) als gegenüber Isocyanaten reaktive Verbindungen, bevorzugt Hydroxylgruppen aufweisende Verbindungen, besonders bevorzugt Triolen Verbindungen (b4) eingesetzt werden, die eine nominelle Funktionalität von 3 und ein Molekulargewicht kleiner 500 g/mol aufweisen, bevorzugt ein mit Glycerin und/oder Trimethylolpropan, besonders bevorzugt ein mit Trimethylolpropan gestarteter Polyetheralkohol auf der Basis von Ethylenoxid und/oder Propylenoxid.

Durch Zusatz eines Triols als (b2) und/oder (b4), bevorzugt (b2) können Vernetzungspunkte innerhalb der Weichphase aufgebaut werden. Der Einsatz eines 3-funktionellen Polyetheralkohols (b2) ist erfindungsgemäß, da dieses mit (b1) gut mischbar ist und bevorzugt eine vergleichbare Reaktivität gegenüber MDI hat. Da in diesem Fall keine Allophanate aufgebaut werden müssen, ist eine maximale Reaktionstemperatur von 80 - 95°C ausreichend.

Erfindungsgemäß besonders bevorzugte Produkte sind zylindrische, bevorzugt hohle Formkörper, insbesondere hohle zylindrische Automobilzusatzfedern bevorzugt für Kraftfahrzeugstoßdämpfer, insbesondere bevorzugt Kraftfahrzeugstoßdämpfer enthaltend hohle zylindrische Automobilzusatzfeder auf der Basis der erfindungsgemäßen zelligen Polyisocyanat-Polyadditionsprodukten. Unter dem Ausdruck "zylindrisch" sind nicht nur Formkörper zu verstehen, die eine kreisrunde Grundfläche und einen konstanten Radius über die Höhe aufweisen, sondern auch Formkörper, die einen ovalen Querschnitt und/oder eine ovale Grundfläche besitzen. Auch Formkörper, bei denen lediglich Abschnitte entlang der Längsachse einen runden oder ovalen Querschnitt aufweisen, sind in dieser Schrift per Definition von dem Ausdruck "zylindrisch" umfasst. Ebenso fallen Formkörper unter diesen Begriff "zylindrisch", bei denen der Radius über die Länge variiert, bei denen also der Formkörper Einschnürungen und/oder Ausstülpungen aufweist. Bevorzugt sind zylindrische Formkörper, die einen kreisrunden Querschnitt ausweisen. Ein Beispiel für eine zylindrische Zusatzfeder ist in der Abbildung 1 bei den Beispielen angegeben. Unter dem Ausdruck "hohle" Formkörper sind in dieser Schrift per Definition solche Formkörper zu verstehen, die entlang der Längsachse, bevorzugt konzentrisch entlang der Längsachse eine Aushöhlung aufweisen. Bevorzugt ist unter dem Ausdruck "hohl" zu verstehen, dass in dem Formkörper ein durchgehender, bevorzugt konzentrischer Hohlraum entlang der gesamten Längsachse des Formkörpers vorliegt. Diese bevorzugten Formen, d.h. die hohlen zylindrischen Formkörper sind als Zusatzfedern allgemein bekannt und vielfältig im Einsatz. Die Herstellung dieser Formkörper in entsprechenden Formen ist vielfältig beschrieben und dem Fachmann allgemein bekannt, z.B. aus DE-C 44 38 143.

Gegenstand der vorliegenden Erfindung ist zudem wie eingangs dargestellt ein Verfahren zur Herstellung von zelligen Polyisocyanat-Polyadditionsprodukten, in dem man bevorzugt in einem zweistufigen Verfahren durch Umsetzung von (a) Diisocyanat, bevorzugt 2,2'-, 2,4'- und/oder 4,4'-Diphenylmethandiisocyanat (MDI), mit (b) Polyetheralkohol, bevorzugt mit einer mittleren Funktionalität, bevorzugt tatsächlichen mittleren Funktionalität zwischen 1,7 und 2,7, besonders bevorzugt zwischen 1,7 und 2,1, ein Isocyanatgruppen aufweisendes Prepolymer mit einem NCO-Gehalt kleiner 10 %, bevorzugt zwischen 2 und 8 %, besonders bevorzugt zwischen 4 % und 7 %, besonders bevorzugt ein erfindungsgemäßes Prepolymer, insbesondere ein Prepolymer gemäß einem der Ansprüche herstellt und dieses Prepolymer anschließend in einer Form mit einer Vernetzerkomponente enthaltend (e) Wasser sowie gegebenenfalls (d) Fettsäuresulfate, bevorzugt zwischen 0,005 bis 1 Gew.-% Fettsäuresulfate, bezogen auf das Gewicht der zelligen Polyisocyanat-Polyadditionsprodukte, umsetzt, wobei man als (b) Polyetheralkohol einsetzt (b1) sowie (b2) und (b3) mit den folgenden Bedeutungen für (b1), (b2) und (b3):

(b1) Polytetrahydrofuran mit einem Molekulargewicht zwischen 1800 g/mol und 2100 g/mol, bevorzugt zwischen 1900 g/mol und 2100 g/mol, besonders bevorzugt zwischen 1901 g/mol und 2100 g/mol sowie

(b2) Polyetheralkohol mit einem Molekulargewicht zwischen 500 g/mol und 7000 g/mol auf der Basis von Ethylenoxid und/oder Propylenoxid
und

(b3) Polytetrahydrofuran mit einem Molekulargewicht zwischen 800 g/mol und 1200 g/mol, wobei der Polyetheralkohol (b1) und (b2) enthält und der Polyetheralkohol (b2) eine Hydrozylzahl kleiner 500 mg KOH/g aufweist und der Polyetheralkohol (b2) auf Ethylenoxid und/oder Propylenoxid sowie Glycerin und/oder Trimethylolpropan als Startsubstanz basiert.

Besonders erfolgt das erfindungsgemäße Verfahren somit derart, dass man in einem zweistufigen Verfahren in der ersten Stufe durch Umsetzung von (a) mit (b) ein Isocyanatgruppen aufweisendes Prepolymer herstellt und dieses Prepolymer in der zweiten Stufe in einer Form mit einer Vernetzerkomponente enthaltend (d) sulfatierte Fettsäureester und (e) Wasser umsetzt, wobei (c) Polysiloxane und gegebenenfalls (f) Katalysatoren, (g) Treibmittel und/oder (h) Zusatzstoffe in dem Prepolymer und/oder der Vernetzerkomponente enthalten sein können. Die Vernetzerkomponente kann dabei als (h) Carbodiimid enthalten.

Die Vernetzerkomponente enthält somit bevorzugt zusätzlich zu dem (e) Wasser noch (d) sulfatierte Fettsäureester, bevorzugt zwischen 0,005 bis 1 Gew.-% sulfatierte Fettsäureester, bezogen auf das Gewicht der zelligen Polyisocyanat-Polyadditionsprodukte, sowie Katalysatoren (f) sowie gegebenenfalls (c) Polysiloxane, (g) Treibmittel und/oder Hilfsstoffe (h). Die Mengenangaben in bezug auf die Fettsäureester beziehen sich dabei auf das Gewicht der sulfatierten Fettsäureester ohne Wasser.

Als Katalysatoren können dabei in der Vernetzerkomponente bevorzugt Zinn-Verbindungen enthalten sein, besonders bevorzugt Zinn(IV)-Verbindungen, besonders bevorzugt Di-n-octylzinn -(IV)- bis (2-ethylhexylthioglycolat) und/oder n-Octylzinn - (IV)- tris (2-ethylhexylthioglycolat). Dadurch konnte die erforderliche Aushärtezeit deutlich reduziert werden. Ein vergleichbarer Effekt konnte durch eine bloße Erhöhung der Menge an aminischem Katalysator nicht erzielt werden. Besonders bevorzugt enthält die Vernetzerkomponente zusätzlich zu den Zinn-Verbindungen aminische Katalysatoren, insbesondere tertiäre Amine, besonders bevorzugt Bis-(dimethylaminoethyl)ether, 1,4-Diazabicyclo-[2,2,2]-octan, N,N,N',N'',N''-Pentamethyldiethylendiamin, N-Methylimidazol, N-Propylimidazol und/oder N-(2-dimethyaminoethyl)-N'-piperazin.

Als Polysiloxane können allgemein bekannte Verbindungen eingesetzt werden, beispielsweise Polymethylsiloxane, Polydimethylsiloxane und/oder Polyoxyalkylen-Silikon-Copolymere. Beispielsweise kommen Verbindungen der folgenden allgemeinen Strukturformel in Betracht:

$$\text{XYZSi-O-[SiXY-O-]}_n\text{-SiXYZ}$$

mit

X: -CH$_3$, -CH$_2$CH$_3$, -[CH$_2$CH$_2$-O-]$_m$-OH;
Y: -CH$_3$, -CH$_2$CH$_3$, -[CH$_2$CH$_2$-O-]$_m$-OH;
Z: -OH, -R-OH, -R-SH, -R-NH-R, -[CH$_2$CH$_2$-O-]$_m$-OH;
n: 1 bis 100;
m: 1 bis 100;
R: Alkyl, -O-Alkyl, -S-Alkyl, -NH-Alkyl mit 1 bis 20 Kohlenstoffatomen im Alkylrest.

Bevorzugt weisen die Polysiloxane eine Viskosität bei 25°C von 20 bis 2000 mPas auf.

Als sulfatierte Fettsäureester können allgemein bekannte sulfatierte Festsäureester, die auch kommerziell erhältlich sind, eingesetzt werden. Bevorzugt wird als sulfatierter Fettsäureester sulfatiertes Rizinusöl eingesetzt.

Die Menge an sulfatierten Fettsäureestern geht bevorzugt nicht über den bevorzugten Bereichen hinaus, da insbesondere eine deutlich verbesserte, d.h. geringer Wasseraufnahme der Formkörper mit einer größeren Menge dieses Emulgators nicht erreicht wird. Sollten aufgrund des Einsatzes weiterer Verbindungen in der Vernetzerkomponente, die nachfolgend beschrieben wird, beispielsweise Hydrolyseschutzmittel, z.B. Carbodiimide, für eine ausreichende Homogenisierung dieser Vernetzerkomponente weitere Mengen an Emulgatoren erforderlich sein, so können über die erfindungsgemäße Menge an sulfatierten Fettsäureestern hinaus oder als vollständiger Ersatz der sulfatierten Fettsäureester beispielsweise weitere allgemein bekannte Emulgatoren eingesetzt werden, z.B. Polyglykolester von Fettsäuren, Alkoxylate von Fettsäuren, bevorzugt Polyethylenglykolester, Polypropylenglykolester, Polyethylenpolypropylenglykolester, Ethoxylate und/oder Propoxylate der Linolsäure, Linolensäure, Ölsäure, Arachidonsäure, besonders bevorzugt Ölsäureethoxylate.

Die sulfatierten Fettsäureester können bevorzugt als wässrige Lösungen, beispielsweise als 50 %-ige wässrige Lösungen eingesetzt werden.

Bevorzugt wird die Herstellung der erfindungsgemäßen zelligen Polyisocyanat-Polyadditionsprodukte in einer Form bei einer Oberflächentemperatur der Forminnenwand von 60 bis 90°C durchgeführt. Unter dem Begriff "Oberflächentemperatur der Forminnenwand" ist dabei die Temperatur zu verstehen, die die Oberfläche der Innenwand der Form, d.h. die Oberfläche der Form, die üblicherweise mit dem Reaktionssystem bei der Herstellung der Formteile in Kontakt steht, bei der Herstellung der Formteile zumindestens kurzzeitig, bevorzugt mindestens 10 min, aufweist.

Die erfindungsgemäßen zelligen Polyisocyanat-Polyadditionsprodukte weisen bevorzugt eine Glastemperatur kleiner -50°C, eine Zugfestigkeit nach DIN EN ISO 1798 von $\geq 2$, bevorzugt $\geq 3$ N/mm², eine Bruchdehnung nach DIN EN ISO 1798 von $\geq 200$, bevorzugt $\geq 300$ % und eine Weiterreißfestigkeit nach DIN ISO 34-1B(b)von $\geq 8$ N/mm und besonders bevorzugt einen Druckverformungsrest (bei 80°C) in Anlehnung an DIN 53572 von kleiner 40 % auf.

Besonders bevorzugt beträgt die Wasseraufnahme der zelligen Polyisocyanat-Polyadditionsprodukte kleiner 50, bevorzugt kleiner 30 Gew.-%, besonders bevorzugt kleiner 20 % bezogen auf das Gewicht des Polyisocyanat-Polyadditionsproduktes.

Verwendung finden die erfindungsgemäßen zelligen Polyisocyanat-Polyadditionsprodukte, im Folgenden auch als "Formkörper" bezeichnet, als Dämpfungselemente im Fahrzeugbau, beispielsweise im Automobilbau, z.B. als Zusatzfedern, Anschlagpuffer, Querlenkerlager, Hinterachsfahrschemellager, Stabilisator-Lager, Längsstreben-Lager, Federbein-Stützlager, Stoßdämpferlager, Lager für Dreieckslenker und/oder als auf der Felge befindliches Notrad, das beispielsweise bei einem Reifenschaden bewirkt, dass das Fahrzeug auf dem zelligen Polyisocyanat-Polyadditionsprodukt fährt und steuerbar bleibt.

Die erfindungsgemäßen Formkörper, d.h. die zelligen Polyisocyanat-Polyadditionsprodukte, bevorzugt die mikrozelligen Polyurethanelastomere, weisen demnach nicht nur exzellente mechanische und dynamische Eigenschaften auf, insbesondere die Hydrolysestabilität, die Mikrobenbeständigkeit und die Kälteflexibilität konnten wie gewünscht erfindungsgemäß deutlich verbessert werden. Insbesondere diese Kombination besonders vorteilhafter Eigenschaften ist aus dem Stand der Technik nicht bekannt.

Die Herstellung der Formteile wird vorteilhafterweise bei einem NCO/OH-Verhältnis von 0,85 bis 1,20 durchgeführt, wobei die erwärmten Ausgangskomponenten gemischt und in einer der gewünschten Formteildichte entsprechenden Menge in ein beheiztes, bevorzugt dichtschließendes Formwerkzeug gebracht werden.

Die Formteile sind nach 5 bis 40 Minuten ausgehärtet und damit entformbar.

Die Menge des in das Formwerkzeug eingebrachten Reaktionsgemisches wird üblicherweise so bemessen, dass die erhaltenen Formkörper die bereits dargestellte Dichte aufweisen. Die erfindungsgemäß erhältlichen zelligen Polyisocyanat-Polyadditionsprodukte weisen bevorzugt eine Dichte nach DIN EN ISO 845 von 200 bis 800, besonders bevorzugt 300 bis 600 kg/m³ auf.

Die Ausgangskomponenten werden üblicherweise mit einer Temperatur von 15 bis 120°C, vorzugsweise von 30 bis 110°C, in das Formwerkzeug eingebracht. Die Verdichtungsgrade zur Herstellung der Formkörper liegen zwischen 1,1 und 8, vorzugsweise zwischen 2 und 6.

Die erfindungsgemäßen zelligen Polyisocyanat-Polyadditionsprodukte werden zweckmäßigerweise nach dem one shot-Verfahren mit Hilfe der Niederdruck-Technik oder insbesondere der Reaktionsspritzguß-Technik (RIM) in offenen oder vorzugsweise geschlossenen Formwerkzeugen, hergestellt. Die Reaktion wird insbesondere unter Verdichtung in einem geschlossenen Formwerkzeug durchgeführt. Die Reaktionsspritzguss-Technik wird beispielsweise beschrieben von H. Piechota und H. Röhr in "Integralschaumstoffe", Carl Hanser-Verlag, München, Wien 1975; D.J. Prepelka und J.L. Wharton in Journal of Cellular Plastics, März/April 1975, Seiten 87 bis 98 und U. Knipp in Journal of Cellular Plastics, März/April 1973, Seiten 76-84.

Bei Verwendung einer Mischkammer mit mehreren Zulaufdüsen können die Ausgangskomponenten einzeln zugeführt und in der Mischkammer intensiv vermischt werden. Als vorteilhaft hat es sich erwiesen, nach dem Zweikomponenten-Verfahren zu arbeiten.

Nach einer besonders vorteilhaften Ausführungsform wird in einem zwei-stufigen Prozess zunächst ein NCO-gruppenhaltiges Prepolymer hergestellt. Dazu wird die Komponente (b) mit (a) im Überschuss üblicherweise bei Temperaturen von 80°C bis 160°C zur Reaktion gebracht. Die Reaktionszeit ist auf das Erreichen des theoretischen NCO-Gehaltes bemessen.

Bevorzugt erfolgt demnach die erfindungsgemäße Herstellung der Formkörper in einem zweistufigen Verfahren, indem man in der ersten Stufe durch Umsetzung von (a) mit (b) ein Isocyanatgruppen aufweisendes Prepolymer herstellt und dieses Prepolymer in der zweiten Stufe in einer Form mit einer Vernetzerkomponente enthaltend (d) und (e) umsetzt, wobei (c) und gegebenenfalls (f), (g) und/oder (h) in dem Prepolymer und/oder der Vernetzerkomponente enthalten sind.

Die Komponente (c) kann bei dem zweistufigen Verfahren sowohl dem Prepolymeren vor, während und/oder nach seiner Herstellung und/oder der Vernetzerkomponente zugegeben werden. Die Hilfs- und/oder Zusatzstoffe (h) können bevorzugt in der Vernetzerkomponente enthalten sein.

Zur Verbesserung der Entformung der erfindungsgemäß hergestellten Formkörper hat es sich als vorteilhaft erwiesen, die Formwerkzeuginnenflächen zumindest zu Beginn einer Produktionsreihe mit üblichen äußeren Formtrennmitteln, beispielsweise auf Wachs- oder Silikonbasis oder insbesondere mit wässrigen Seifenlösungen, zu beschichten.

Die Entformzeiten betragen in Abhängigkeit von der Größe und Geometrie des Formteils durchschnittlich 5 bis 40 Minuten.

Nach der Herstellung der Formteile in der Form können die Formteile bevorzugt für eine Dauer von 1 bis 48 Stunden bei Temperaturen von üblicherweise von 70 bis 140°C getempert werden.

Zu den Ausgangskomponenten enthaltend in dem erfindungsgemäßen Reaktionsgemisch kann folgendes ausgeführt werden:

Als Isocyanate (a) können allgemein bekannte (cyclo)aliphatische und/oder aromatische Polyisocyanate eingesetzt werden. Zur Herstellung der erfindungsgemäßen Verbundelemente eignen sich besonders aromatische Diisocyanate, vorzugsweise 2,2'-, 2,4'- und/oder 4,4'-Diphenylmethandiisocyanat (MDI), 1,5-Naphthylendiisocyanat (NDI), 2,4- und/oder 2,6-Toluylendiisocyanat (TDI), 3,3'-Dimethyl-diphenyl-diisocyanat, 1,2-Diphenylethandiisocyanat, p-Phenylendiisocyanat und/oder (cyclo)aliphatische Isocyanat wie z.B. 1,6-Hexamethylendiisocyanat, 1-Isocyanato-3,3,5-trimethyl-5-isocyanatomethylcyclohexan und/oder Polyisocyanate wie z.B. Polyphenylpolymethylenpolyisocyanate. Die Isocyanate können in Form der reinen Verbindung, in Mischungen und/oder in modifizierter Form, beispielsweise in Form von Uretdionen, Isocyanuraten, Allophanaten oder Biureten, vorzugsweise in Form von Urethan- und Isocyanatgruppen enthaltenden Umsetzungsprodukten, sogenannten Isocyanat-Prepolymeren, eingesetzt werden. Bevorzugt werden gegebenenfalls modifiziertes 2,2'-, 2,4'-und/oder 4,4'-Diphenylmethandiisocyanat (MDI), 1,5-Naphthylendiisocyanat (NDI), 2,4-und/oder 2,6-Toluylendiisocyanat (TDI) und/oder Mischungen dieser Isocyanate eingesetzt, besonders bevorzugt 2,2'-, 2,4'- und/oder 4,4'-Diphenylmethandiisocyanat (MDI), insbesondere bevorzugt 4,4'-Diphenylmethandiisocyanat mit bis zu 2,5 Gew.-% 2,4'-Diphenylmethandiisocyanat, bezogen auf das Gesamtgewicht von 4,4'-Diphenylmethandiisocyanat und 2,4' Diphenylmethandiisocyanat.

Als gegenüber Isocyanaten reaktive Verbindungen (b) kommen die bereits dargestellten Polyetherole zum Einsatz. Diese können gegebenenfalls zusammen mit allgemein bekannte Polyhydroxylverbindungen eingesetzt werden, bevorzugt solche mit einer Funktionalität von 2 bis 3 und bevorzugt einem Molekulargewicht von 60 bis 7000, besonders bevorzugt 500 bis 6000, insbesondere 800 bis 6000. Bevorzugt werden gegebenenfalls zusätzlich zu den erfindungsgemäßen Polyetherolen als (b) Polyetheresterpolyole, Polyesterpolyalkohole und/oder hydroxylgruppenhaltige Polycarbonate eingesetzt. Besonders bevorzugt werden ausschließlich die erfindungsgemäßen Polyetherole als Komponente (b) eingesetzt.

Zusätzlich zu den bereits beschriebenen gegenüber Isocyanaten reaktiven Komponenten können des weiteren niedermolekulare Kettenverlängerungsmittel (b5) mit einem Molekulargewicht von kleiner 500, bevorzugt 60 bis 499 eingesetzt werden, beispielsweise ausgewählt aus der Gruppe der difunktionellen Alkohole, difunktionellen Polyoxyalkylen-polyole. Als (b5) können beispielsweise Alkandiole mit 2 bis 12, bevorzugt 2, 4, oder 6 Kohlenstoffatomen verwendet werden, z.B. Ethan-, 1,3-Propan-, 1,5-Pentan-, 1,6-Hexan-, 1,7-Heptan-, 1,8-Octan-, 1,9-Nonan-, 1,10-Decandiol und vorzugsweise 1,4-Butandiol, Dialkylenglykole mit 4 bis 8 Kohlenstoffatomen, wie z.B. Diethylenglykol und Dipropylenglykol und/oder difunktionelle Polyoxyalkylen-polyole. Weiterhin können eingesetzt werden alkylsubstituierte aromatische Polyamine mit Molekulargewichten vorzugsweise von 122 bis 400, insbesondere primäre aromatische Diamine, die in ortho-Stellung zu den Aminogruppen mindestens einen Alkylsubstituenten besitzen, welcher die Reaktivität der Aminogruppe durch sterische Hinderung vermindert, die bei Raumtemperatur flüssig und mit den höhermolekularen, bevorzugt mindestens difunktionellen Verbindungen (b) unter den Verarbeitungsbedingungen zumindest teilweise, vorzugsweise jedoch vollständig mischbar sind. Zur Herstellung der erfindungsgemäßen Formkörper können die technisch gut zugänglichen 1,3,5-Triethyl-2,4-phenylendiamin, 1-Methyl-3,5-diethyl-2,4-phenylendiamin, Mischungen aus 1-Methyl-3,5-diethyl-2,4- und -2,6-phenylendiaminen, sogenanntes DETDA, Isomerengemische aus 3,3'-di- oder 3,3',5,5'-tetraalkylsubstituierten 4,4'-Diaminodiphenylmethanen mit 1 bis 4 C-Atomen im Alkylrest, insbesondere Methyl-, Ethyl- und Isopropylreste gebunden enthaltende 3,3',5,5'-tetraalkylsubstituierte 4,4'-Diaminodiphenylmethane sowie Gemische aus den genannten tetraalkylsubstituierten 4,4'-Diamino-diphenylmethanen und DETDA verwendet werden. Zur Erzielung spezieller mechanischer Eigenschaften kann es auch zweckmäßig sein, die alkylsubstituierten aromatischen Polyamine im Gemisch mit den vorgenannten niedermolekularen mehrwertigen Alkoholen, vorzugsweise zwei- und/oder dreiwertigen Alkoholen oder Dialkylenglykolen zu verwenden.

Erfindungsgemäß wird die Herstellung der zelligen Polyisocyanat-Polyadditionsprodukte bevorzugt in Gegenwart von Wasser (e) durchgeführt. Das Wasser wirkt sowohl als Vernetzer unter Bildung von Harnstoffgruppen als auch aufgrund der Reaktion mit Isocyanatgruppen unter Bildung von Kohlendioxid als Treibmittel. Aufgrund dieser doppelten Funktion wird es in dieser Schrift getrennt von (b) und (g) aufgeführt. Per Definition enthalten die Komponenten (b) und (g) somit kein Wasser, das per Definition ausschließlich als (e) aufgeführt wird.

Die Wassermengen, die zweckmäßigerweise verwendet werden können, betragen 0,01 bis 5 Gew.-%, vorzugsweise 0,3 bis 3,0 Gew.-%, bezogen auf das Gewicht der Komponente (b). Das Wasser kann vollständig oder teilweise in Form der wässrigen Lösungen des sulfatierten Fettsäureesters eingesetzt werden.

Zur Beschleunigung der Reaktion können dem Reaktionsansatz sowohl bei der Herstellung eines Prepolymeren als auch gegebenenfalls bei der Umsetzung eines Prepolymeren mit einer Vernetzerkomponente allgemein bekannte Katalysatoren (f) zugefügt werden. Die Katalysatoren (f) können einzeln wie auch in Abmischung miteinander zugegeben werden. Die bevorzugten Katalysatoren wurden bereits dargestellt. Diese können ggf. gemeinsam mit anderen allgemein bekannten Katalysatoren eingesetzt werden, z.B. metallorganischen Verbindungen, wie Zinn-(II)-Salze von organischen Carbonsäuren, z. B. Zinn-(II)-dioctoat, Zinn-(II)-dilaurat, Dibutylzinndiacetat und Dibutylzinndilaurat und tertiären Aminen wie Tetramethylethylendiamin, N-Methylmorpholin, Diethylbenzylamin, Triethylamin, Dimethylcyclohexylamin, Diazabicyclooctan, N,N'-Dimethylpiperazin, N-Methyl,N'-(4-N-Dimethylamino-)Butylpiperazin, N,N,N',N'',N''-Pentamethyldiethylendiamin oder ähnliche. Weiterhin kommen als Katalysatoren in Betracht: Amidine, wie z.B. 2,3-Dimethyl-3,4,5,6-tetrahydropyrimidin, Tris-(dialkylaminoalkyl)-s-hexahydrotriazine, insbesondere Tris-(N,N-dimethylaminopropyl)-s-hexahydrotriazin, Tetraalkylammoniumhydroxide, wie z.B. Tetramethylammoniumhydroxid, Alkalihydroxide, wie z.B. Natriumhydroxid, und Alkalialkoholate, wie z.B. Natriummethylat und Kaliumisopropylat, sowie Alkalisalze von langkettigen Fettsäuren mit 10 bis 20 C-Atomen und gegebenenfalls seitenständigen OH-Gruppen.

Je nach einzustellender Reaktivität gelangen die Katalysatoren (f) in Mengen von 0,0001 bis 0,5 Gew.-%, bezogen auf das Prepolymere, zur Anwendung.

Gegebenenfalls können in der Polyurethanherstellung übliche Treibmittel (g) verwendet werden. Geeignet sind beispielsweise niedrig siedende Flüssigkeiten, die unter dem Einfluß der exothermen Polyadditionsreaktion verdampfen. Geeignet sind Flüssigkeiten, welche gegenüber dem organischen Polyisocyanat inert sind und Siedepunkte unter 100°C aufweisen. Beispiele derartiger, vorzugsweise verwendeter Flüssigkeiten sind halogenierte, vorzugsweise fluorierte Kohlenwasserstoffe, wie z.B. Methylenchlorid und Dichlormonofluormethan, per- oder partiell fluorierte Kohlenwasserstoffe, wie z.B. Trifluormethan, Difluormethan, Difluorethan, Tetrafluorethan und Heptafluorpropan, Kohlenwasserstoffe, wie z.B. n- und iso-Butan, n- und iso-Pentan sowie die technischen Gemische dieser Kohlenwasserstoffe, Propan, Propylen, Hexan, Heptan, Cyclobutan, Cyclopentan und Cyclohexan, Dialkylether, wie z.B. Dimethylether, Diethylether und Furan, Carbonsäureester, wie z.B. Methyl- und Ethylformiat, Ketone, wie z.B. Aceton, und/oder fluorierte und/oder perfluorierte, tertiäre Alkylamine, wie z.B. Perfluor-dimethyl-iso-propylamin. Auch Gemische dieser niedrigsiedenden Flüssigkeiten untereinander und/oder mit anderen substituierten oder unsubstituierten Kohlenwasserstoffen können verwendet werden.

Die zweckmäßigste Menge an niedrigsiedender Flüssigkeit zur Herstellung derartiger zellhaltiger elastischer Formkörper aus Harnstoffgruppen gebunden enthaltenden Elastomeren hängt ab von der Dichte, die man erreichen will, sowie von der Menge des bevorzugt mit verwendeten Wassers. Im allgemeinen liefern Mengen von 1 bis 15 Gew.-%, vorzugsweise 2 bis 11 Gew.-%, bezogen auf das Gewicht der Komponente (b), zufriedenstellende Ergebnisse. Besonders bevorzugt wird ausschließlich Wasser (e) als Treibmittel eingesetzt.

Bei der erfindungsgemäßen Herstellung des Formteile können Hilfs- und Zusatzstoffe (h) eingesetzt werden. Dazu zählen beispielsweise allgemein bekannte oberflächenaktive Substanzen, Hydrolyseschutzmittel, Füllstoffe, Antioxidantien, Zellregler, Flammschutzmittel sowie Farbstoffe. Als oberflächenaktive Substanzen kommen Verbindungen in Betracht, welche zur Unterstützung der Homogenisierung der Ausgangsstoffe dienen und gegebenenfalls auch geeignet sind, die Zellstruktur zu regulieren. Genannt seien beispielsweise zu den erfindungsgemäßen Emulgatoren zusätzliche Verbindungen mit emulgierender Wirkung, wie die Salze von Fettsäuren mit Aminen, z.B. ölsaures Diethylamin, stearinsaures Diethanolamin, ricinolsaures Diethanolamin, Salze von Sulfonsäuren, z.B. Alkali- oder Ammoniumsalze von Dodecylbenzol- oder Dinaphthylmethandisulfonsäure. Des weiteren kommen Schaumstabilisatoren in Frage, wie z.B. oxethylierte Alkylphenole, oxethylierte Fettalkohole, Paraffinöle, Ricinusöl- bzw. Ricinolsäureester, Türkischrotöl und Erdnußöl und Zellregler, wie Paraffine und Fettalkohole. Die oberflächenaktiven Substanzen werden üblicherweise in Mengen von 0,01 bis 5 Gew.-Teilen, bezogen auf 100 Gew.-Teile der Komponenten (b) angewandt. Per Definition fallen die Verbindungen (c) und (d) nicht unter die Hilfs- und Zusatzstoffe (h).

Durch die nachfolgenden Beispiele soll die Erfindung näher erläutert werden. Alle erfindungsgemäßen Prepolymere waren bei Raumtemperatur wochenlang lagerstabil. Vor der Weiterverarbeitung wurden sie für 16 h auf 80°C erwärmt und für 2-3 min gerührt. Die Prepolymerviskositäten wurden mit einem Rotationsviskosimeter der Firma Rheometrics Scientific gemessen.

Die statisch-mechanischen Eigenschaften wurden aus Blöcken, die dynamisch-mechanischen Eigenschaften aus Federelementen (s. Abb. 1) ermittelt.

**Abb.1: Federelement (inklusive Biegelippe)**

Beispiel 1 (nicht erfindungsgemäß)

Herstellung des NCO-gruppenhaltigen Prepolymeren

57,0 Gew.-Teile Polytetrahydrofuran 2000 (PolyTHF 2000 der BASF Aktiengesellschaft) und 14,3 Gew.-Teile Polytetrahydrofuran 1000 (PolyTHF 1000 der BASF Aktiengesellschaft)sowie 0,2 Gew.-Teile Schaumstabilisator auf Silikonbasis (DC 193 der Firma Dow Corning) wurden in einem Dreihalskolben unter Stickstoffatmosphäre auf 140°C erwärmt und unter Rühren mit 28,5 Gew.-Teile 4,4'-Diisocyanato-diphenylmethan (Lupranat® MES der BASF Aktiengesellschaft)versetzt. Die Reaktionstemperatur wurde zur vollständigen Umsetzung und zum Aufbau von Allophanat für 10 min bei 145°C gehalten und anschließend abgekühlt. Es resultierte eine fast farblose Flüssigkeit mit einem NCO-Gehalt von 5,7 %, einem Allophanatgehalt von 0,2 % und einer Viskosität von 1600 mPas bei 80°C.

2) Herstellung der Vernetzerkomponente:

| | |
|---|---|
| 74,1 Gew.-Teile | 50%-ige wässrigen Lösung eines Fettsäuresulfates |
| 24,6 Gew.-Teile | Nichtionischer Emulgator Polyethylenglycol (PEG-40) Sorbit Hexaoleat |
| 0,4 Gew.-Teile | Di-n-octylzinn bis (2-ethylhexylthioglycolat) |
| 0,9 Gew.-Teile | Mischung aus Lupragen® N 202 (BASF Aktiengesellschaft) und Niax® catalyst E-A-1 (GE Silicones), Katalysatoren |

3) Herstellung des zylindrischen Formkörpers

100 Gew.-Teile des Prepolymeren gemäß (1) wurden mit 3,03 Gew.-Teilen der Vernetzerkomponente gemäß (2) mit Hilfe einer Niederdruckgießmaschine bei 80°C Prepolymer- und 35°C Vernetzertemperatur gemischt, die Mischung in ein auf 75°C temperiertes, verschließbares Formwerkzeug (z.B. mit der Federgeometrie gemäß Abb. 1) eingebracht und der Schaum bei 75°C für 15 min ausgehärtet. Nach Entformung des mikrozellulären Produktes wurde das Formteil 14 h bei 110°C thermisch nachgehärtet.

Beispiel 2 (erfindungsgemäß)

Herstellung des NCO-gruppenhaltigen Prepolymeren

27,7 Gew.-Teile 4,4'-Diisocyanatodiphenylmethan (Lupranat® MES der BASF Aktiengesellschaft) wurden in einem Dreihalskolben unter Stickstoffatmosphäre aufgeschmolzen und bei 60°C unter Rühren mit einer Mischung aus 54,1 Gew.-Teile Polytetrahydrofuran 2000 (PolyTHF 2000 der BASF Aktiengesellschaft), 13,5 Gew.-Teile Polytetrahydrofuran 1000 (PolyTHF 1000 der BASF Aktiengesellschaft)und 4,7 Gew.-Teile Polyoxypropylen (80 Gew.-%)-polyoxyethylen (20 Gew.-%)-glykol (Hydroxylzahl 27 mg KOH/g; Molekulargewicht 5180 g/mol, hergestellt unter Verwendung von Glycerin als Startmolekül) versetzt. Die Mischung wurde zur vollständigen Umsetzung 1,5 Stunden auf 100°C erwärmt und anschließend abgekühlt. Es resultierte eine fast farblose Flüssigkeit mit einem NCO-Gehalt von 5,7% und einer Viskosität von 1900 mPas bei 80°C.

2) Herstellung der Vernetzerkomponente:

| | |
|---|---|
| 71,2 Gew.-Teile | 50%-ige wässrig Lösung eines Fettsäuresulfates |
| 23,7 Gew.-Teile | Nichtionischer Emulgator Polyethylenglycol (PEG-40) Sorbit Hexaoleat |
| 3,9 Gew.-Teile | Schaumstabilisator auf Silikonbasis (DC 193 der Firma Dow Corning) |
| 0,3 Gew.-Teile | Di-n-octylzinn bis (2-ethylhexlthioglycolat) |
| 0,9 Gew.-Teile | Mischung aus Lupragen® N 202 (BASF Aktiengesellschaft) und Niax® catalyst E-A-1 (GE Silicones), Katalysatoren |

3) Herstellung des zylindrischen Formkörpers

100 Gew.-Teile des Prepolymeren gemäß (1) wurden mit 3,03 Gew.-Teilen der Vernetzerkomponente gemäß (2) mit Hilfe einer Niederdruckgießmaschine bei 80°C Prepolymer- und 35°C Vernetzertemperatur gemischt, die Mischung in ein auf 75°C temperiertes, verschließbares Formwerkzeug (z.B. mit der Federgeometrie gemäß Abb. 1) eingebracht und der Schaum bei 75°C für 15 min ausgehärtet. Nach Entformung des mikrozellulären Produktes wurde das Formteil 14 h bei 110°C thermisch nachgehärtet.

Beispiel 3 (nicht erfindungsgemäß)

Herstellung des NCO-gruppenhaltigen Prepolymeren

64,6 Gew.-Teile Polytetrahydrofuran 2000 (PolyTHF 2000 der BASF Aktiengesellschaft) und 7,2 Gew.-Teile Polytetrahydrofuran 1000 (PolyTHF 1000 der BASF Aktiengesellschaft)sowie 0,2 Gew.-Teile Schaumstabilisator auf Silikonbasis (DC 193 der Firma Dow Corning) wurden in einem Dreihalskolben unter Stickstoffatmosphäre auf 140°C erwärmt und unter Rühren mit 28,0 Gew.-Teile 4,4'-Diisocyanato-diphenylmethan (Lupranat® MES der BASF Aktiengesellschaft)versetzt. Die Reaktionstemperatur wurde zur vollständigen Umsetzung und zum Aufbau von Allophanat für 10 min bei 145°C gehalten und anschließend abgekühlt. Es resultierte eine fast farblose Flüssigkeit mit einem NCO-Gehalt von 5,8 %, einem Allophanatgehalt von 0,2% und einer Viskosität von 2000 mPas bei 80°C.

2) Herstellung der Vernetzerkomponente:

| | |
|---|---|
| 74,0 Gew.-Teile | 50%-ige wässrige Lösung eines sulfatierten Fettsäureesters |
| 24,7 Gew.-Teile | Nichtionischer Emulgator Polyethylenglycol (PEG-40) Sorbit Hexaoleat |
| 0,3 Gew.-Teile | Di-n-octylzinn bis (2-ethylhexlthioglycolat) |
| 1,0 Gew.-Teile | Mischung aus Lupragen® N 202 (BASF Aktiengesellschaft) und Niax® catalyst E-A-1 (GE Silicones), Katalysatoren |

3) Herstellung des zylindrischen Formkörpers

100 Gew.-Teile des Prepolymeren gemäß (1) wurden mit 3,10 Gew.-Teilen der Vernetzerkomponente gemäß (2) mit Hilfe einer Niederdruckgießmaschine bei 80°C Prepolymer- und 35°C Vernetzertemperatur gemischt, die Mischung in ein auf 75°C temperiertes, verschließbares Formwerkzeug (z.B. mit der Federgeometrie gemäß Abb. 1) eingebracht und der Schaum bei 75°C für 15 min ausgehärtet. Nach Entformung des mikrozellulären Produktes wurde das Formteil 14 h bei 110°C thermisch nachgehärtet.

Beispiel 4 (erfindungsgemäß)

Herstellung des NCO-gruppenhaltigen Prepolymeren

27,7 Gew.-Teile 4,4'-Diisocyanatodiphenylmethan (Lupranat® MES der BASF Aktiengesellschaft) wurden in einem Dreihalskolben unter Stickstoffatmosphäre aufgeschmolzen und bei 60°C unter Rühren mit einer Mischung aus 60,9 Gew.-Teile Polytetrahydrofuran 2000 (PolyTHF 2000 der BASF Aktiengesellschaft), 6,8 Gew.-Teile Polytetrahydrofuran 1000 (PolyTHF 1000 der BASF Aktiengesellschaft)und 4,7 Gew.-Teile Polyoxypropylen (80 Gew.-%)-polyoxyethylen (20 Gew.-%)-glykol (Hydroxylzahl 27 mg KOH/g; Molekulargewicht 5180 g/mol, hergestellt unter Verwendung von Glycerin als Startmolekül) versetzt. Die Mischung wurde zur vollständigen Umsetzung 1,5 Stunden auf 90°C erwärmt und anschließend abgekühlt. Es resultierte eine fast farblose Flüssigkeit mit einem NCO-Gehalt von 6,0 % und einer Viskosität von 1400 mPas bei 80°C.

2) Herstellung der Vernetzerkomponente:

| | |
|---|---|
| 94,5 Gew.-Teile | 50%-ige wässrige Lösung eines sulfatierten Fettsäureesters |
| 4,1 Gew.-Teile | Schaumstabilisator auf Silikonbasis (DC 193 der Firma Dow Corning) |
| 0,5 Gew.-Teile | Di-n-octylzinn bis (2-ethylhexlthioglycolat) |
| 0,9 Gew.-Teile | N-(2-dimethyaminoethyl)-N'-piperazin |

3) Herstellung des zylindrischen Formkörpers

100 Gew.-Teile des Prepolymeren gemäß (1) wurden mit 2,56 Gew.-Teilen der Vernetzerkomponente gemäß (2) mit Hilfe einer Niederdruckgießmaschine bei 80°C Prepolymer- und 35°C Vernetzertemperatur gemischt, die Mischung in ein auf 75°C temperiertes, verschließbares Formwerkzeug (z.B. mit der Federgeometrie gemäß Abb. 1) eingebracht und der Schaum bei 75°C für 15 min ausgehärtet. Nach Entformung des mikrozellulären Produktes wurde das Formteil 14 h bei 110°C thermisch nachgehärtet.

Beispiel 5 (erfindungsgemäß)

Herstellung des NCO-gruppenhaltigen Prepolymeren

27,4 Gew.-Teile 4,4'-Diisocyanatodiphenylmethan (Lupranat® MES der BASF Aktiengesellschaft) wurden in einem Dreihalskolben unter Stickstoffatmosphäre aufgeschmolzen und bei 60°C unter Rühren mit einer Mischung aus 62,3 Gew.-Teile Polytetrahydrofuran 2000 (PolyTHF 2000 der BASF Aktiengesellschaft), 6,9 Gew.-Teile Polytetrahydrofuran 1000 (PolyTHF 1000 der BASF Aktiengesellschaft)und 3,4 Gew.-Teile Polyoxypropylen (80 Gew.-%)-polyoxyethylen (20 Gew.-%)-glykol (Hydroxylzahl 27 mg KOH/g; Molekulargewicht 5180 g/mol, hergestellt unter Verwendung von Glycerin als Startmolekül) versetzt. Die Mischung wurde zur vollständigen Umsetzung 1,5 Stunden auf 90°C erwärmt und anschließend abgekühlt. Es resultierte eine fast farblose Flüssigkeit mit einem NCO-Gehalt von 5,9 % und einer Viskosität von 1600 mPas bei 80°C.

2) Herstellung der Vernetzerkomponente:

| | |
|---|---|
| 94,7 Gew.-Teile | 50%-ige wässrige Lösung eines sulfatierten Fettsäureesters |
| 4,1 Gew.-Teile | Schaumstabilisator auf Silikonbasis (DC 193 der Firma Dow Corning) |
| 0,4 Gew.-Teile | Di-n-octylzinn bis (2-ethylhexlthioglycolat) |
| 0,8 Gew.-Teile | N-(2-dimethyaminoethyl)-N'-piperazin |

3) Herstellung des zylindrischen Formkörpers

100 Gew.-Teile des Prepolymeren gemäß (1) wurden mit 2,4 Gew.-Teilen der Vernetzerkomponente gemäß (2) mit Hilfe einer Niederdruckgießmaschine bei 80°C Prepolymer- und 35°C Vernetzertemperatur gemischt, die Mischung in ein auf 75°C temperiertes, verschließbares Formwerkzeug (z.B. mit der Federgeometrie gemäß Abb. 1) eingebracht und der Schaum bei 75°C für 15 min ausgehärtet. Nach Entformung des mikrozellulären Produktes wurde das Formteil 14 h bei 110°C thermisch nachgehärtet.

Beispiel 6 (erfindungsgemäß)

Herstellung des NCO-gruppenhaltigen Prepolymeren

27,7 Gew.-Teile 4,4'-Diisocyanatodiphenylmethan (Lupranat® MES der BASF Aktiengesellschaft) wurden in einem Dreihalskolben unter Stickstoffatmosphäre aufgeschmolzen und bei 60°C unter Rühren mit einer Mischung aus 47,8 Gew.-Teile Polytetrahydrofuran 2000 (PolyTHF 2000 der BASF Aktiengesellschaft), 13,7 Gew.-Teile Polytetrahydrofuran 1000 (PolyTHF 1000 der BASF Aktiengesellschaft, 6,1 Gew.-Teile Polytetrahydrofuran 1800 (PolyTHF 1800 der BASF Aktiengesellschaft)und 4,7 Gew.-Teile Polyoxypropylen (80 Gew.-%)-polyoxyethylen (20 Gew.-%)-glykol (Hydroxylzahl 27 mg KOH/g; Molekulargewicht 5180 g/mol, hergestellt unter Verwendung von Glycerin als Startmolekül) versetzt. Die Mischung wurde zur vollständigen Umsetzung 1,5 Stunden auf 100°C erwärmt und anschließend abgekühlt. Es resultierte eine fast farblose Flüssigkeit mit einem NCO-Gehalt von 5,7 % und einer Viskosität von 2100 mPas bei 70°C.

2) Herstellung der Vernetzerkomponente:

s. Beispiel 5 (erfindungsgemäß)

3) Herstellung des zylindrischen Formkörpers

100 Gew.-Teile des Prepolymeren gemäß (1) wurden mit 2,3 Gew.-Teilen der Vernetzerkomponente gemäß (2) mit Hilfe einer Niederdruckgießmaschine bei 70°C Prepolymer- und 35°C Vernetzertemperatur gemischt, die Mischung in ein auf 70°C temperiertes, verschließbares Formwerkzeug (z.B. mit der Federgeometrie gemäß Abb. 1) eingebracht und der Schaum bei 70°C für 15 min ausgehärtet. Nach Entformung des mikrozellulären Produktes wurde das Formteil 14 h bei 110°C thermisch nachgehärtet.

Beispiel 7 (nicht erfindungsgemäß)

Herstellung des NCO-gruppenhaltigen Prepolymeren

26,5 Gew.-Teile 4,4'-Diisocyanatodiphenylmethan (Lupranat® MES der BASF Aktiengesellschaft) wurden in einem Dreihalskolben unter Stickstoffatmosphäre aufgeschmolzen und bei 60°C unter Rühren mit einer Mischung aus 55,0 Gew.-Teile Polytetrahydrofuran 2000 (PolyTHF 2000 der BASF Aktiengesellschaft), 13,8 Gew.-Teile eines Polypropylenoxid (Acclaim™ Polyol 2200 der BAYER AG, Hydroxylzahl von 56 mg KOH/g, Molekulargewicht 2000 g/mol) und 4,7 Gew.-Teile Polyoxypropylen (80 Gew.-%)-polyoxyethylen (20 Gew.-%)-glykol (Hydroxylzahl 27 mg KOH/g; Molekulargewicht 5180 g/mol, hergestellt unter Verwendung von Glycerin als Startmolekül) versetzt. Die Mischung wurde zur vollständigen Umsetzung 1,5 Stunden auf 100°C erwärmt und anschließend abgekühlt. Es resultierte eine fast farblose Flüssigkeit mit einem NCO-Gehalt von 5,8 % und einer Viskosität von 1200 mPas bei 75°C.

2) Herstellung der Vernetzerkomponente:

s. Beispiel 2 (erfindungsgemäß)

3) Herstellung des zylindrischen Formkörpers

100 Gew.-Teile des Prepolymeren gemäß (1) wurden mit 3,10 Gew.-Teilen der Vernetzerkomponente gemäß (2) mit Hilfe einer Niederdruckgießmaschine bei 75°C Prepolymer- und 35°C Vernetzertemperatur gemischt, die Mischung in ein auf 67°C temperiertes, verschließbares Formwerkzeug (z.B. mit der Federgeometrie gemäß Abb. 1) eingebracht und der Schaum bei 67°C für 15 min ausgehärtet. Nach Entformung des mikrozellulären Produktes wurde das Formteil 14 h bei 110°C thermisch nachgehärtet.

Beispiel 8 (nicht erfindungsgemäß)

Herstellung des NCO-gruppenhaltigen Prepolymeren

26,4 Gew.-Teile 4,4'-Diisocyanatodiphenylmethan (Lupranat® MES der BASF Aktiengesellschaft) wurden in einem Dreihalskolben unter Stickstoffatmosphäre aufgeschmolzen und bei 60°C unter Rühren mit einer Mischung aus 54,2 Gew.-Teile Polytetrahydrofuran 2000 (PolyTHF 2000 der BASF Aktiengesellschaft), 13,5 Gew.-Teile eines Polypropylenoxid (Hydroxylzahl von 55 mg KOH/g, Molekulargewicht 1970 g/mol, hergestellt unter Verwendung von Propylenglykol als Startmolekül)und 5,9 Gew.-Teile Polyoxypropylen (80 Gew.-%)-polyoxyethylen (20 Gew.-%)-glykol (Hydroxylzahl 27 mg KOH/g; Molekulargewicht 5180 g/mol, hergestellt unter Verwendung von Glycerin als Startmolekül) versetzt. Die Mischung wurde zur vollständigen Umsetzung 1,5 Stunden auf 100°C erwärmt und anschließend abgekühlt. Es resultierte eine fast farblose Flüssigkeit mit einem NCO-Gehalt von 5,8 % und einer Viskosität von 1400 mPas bei 75°C.

2) Herstellung der Vernetzerkomponente:

| | |
|---|---|
| 94,7 Gew.-Teile | 50%-ige wässrige Lösung eines sulfatierten Fettsäure esters |
| 4,1 Gew.-Teile | Schaumstabilisator auf Silikonbasis (DC 193 der Firma Dow Corning) |
| 0,4 Gew.-Teile | Di-n-octylzinn bis (2-ethylhexlthioglycolat) |
| 0,8 Gew.-Teile | N-(2-dimethyaminoethyl)-N'-piperazin |

3) Herstellung des zylindrischen Formkörpers

100 Gew.-Teile des Prepolymeren gemäß (1) wurden mit 2,34 Gew.-Teilen der Vernetzerkomponente gemäß (2) mit Hilfe einer Niederdruckgießmaschine bei 75°C Prepolymer- und 35°C Vernetzertemperatur gemischt, die Mischung in ein auf 67°C temperiertes, verschließbares Formwerkzeug (z.B. mit der Federgeometrie gemäß Abb. 1) eingebracht und der Schaum bei 67°C für 15 min ausgehärtet. Nach Entformung des mikrozellulären Produktes wurde das Formteil 14 h bei 110°C thermisch nachgehärtet.

Vergleichsbeispiel 1

1) Herstellung des NCO-gruppenhaltigen Prepolymeren

70,7 Gew.-Teile Poly(ethylenbutylen-adipat) (Hydroxylzahl von 56 mg KOH/g, Molekulargewicht 2000 g/mol), 0,4 Gew.-Teile 1,4-Butandiol sowie 0,2 Gew.-Teile Schaumstabilisator auf Silikonbasis (DC 193 der Firma Dow Corning) wurden in einem Dreihalskolben unter Stickstoffatmosphäre auf 140°C erwärmt und unter Rühren mit 28,6 Gew.-Teile 4,4' Diisocyanato-diphenylmethan(Lupranat® MES der BASF Aktiengesellschaft)versetzt. Die Reaktionstemperatur wurde zur vollständigen Umsetzung und zum Aufbau von Allophanat für 10 min bei 145°C gehalten und anschließend abgekühlt. Es resultierte eine fast farblose Flüssigkeit mit einem NCO-Gehalt von 6,0 %, einem Allophanatgehalt von 0,2% und einer Viskosität von 1900 mPas bei 90°C.

2) Herstellung der Vernetzerkomponente:

| | |
|---|---|
| 74,4 Gew.-Teile | 50%-ige wässrige Lösung eines sulfatierten Fettsäureesters |
| 21,3 Gew.-Teile | 2,2',6,6'-Tetraisopropyldiphenyl-carbodiimid |
| 3,2 Gew.-Teile | Schaumstabilisator auf Silikonbasis (DC 193 der Firma Dow Corning) |
| 0,9 Gew.-Teile | Gemisch von Fettsäurepolyglycolestern und Aminsalzen von Alkylbenzolsulfonaten |
| 0,2 Gew.-Teile | Mischung aus 30 Gew.-% Pentamethyl-diethylentriamin und70 Gew.-% N-Methyl-N'-(dimethylaminoethyl)-piperazin |

3) Herstellung des zylindrischen Formkörpers

100 Gew.-Teile des Prepolymeren gemäß (1) wurden mit 3,22 Gew.-Teilen der Vernetzerkomponente gemäß (2) mit Hilfe einer Niederdruckgießmaschine bei 90°C Prepolymer- und 50°C Vernetzertemperatur gemischt, die Mischung in ein auf 85°C temperiertes, verschließbares Formwerkzeug (z.B. mit der Federgeometrie gemäß Abb. 1) eingebracht und der Schaum bei 85°C für 20 min ausgehärtet. Nach Entformung des mikrozellulären Produktes wurde das Formteil 14 h bei 110°C thermisch nachgehärtet.

Vergleichsbeispiel 2

1) Herstellung des NCO-gruppenhaltigen Prepolymeren

26,7 Gew.-Teile 4,4-Diisocyanatodiphenylmethan (Lupranat® MES der BASF Aktiengesellschaft) wurden in einem Dreihalskolben unter Stickstoffatmosphäre aufgeschmolzen und bei 60°C unter Rühren mit 73,3 Gew.-Teile Polytetrahydrofuran 2000 (Hydroxylzahl von 56 mg KOH/g, Molekulargewicht 2000 g/mol)versetzt. Die Mischung wurde zur vollständigen Umsetzung 1,5 Stunden auf 90°C erwärmt und anschließend abgekühlt. Es resultierte eine fast farblose Flüssigkeit mit einem NCO-Gehalt von 5,8 % und einer Viskosität von 1400 mPas bei 80°C.

2) Herstellung der Vernetzerkomponente:

s. Beispiel 2 (erfindungsgemäß)

3) Herstellung des zylindrischen Formkörpers

100 Gew.-Teile des Prepolymeren gemäß (1) wurden mit 3,24 Gew.-Teilen der Vernetzerkomponente gemäß (2) mit Hilfe einer Niederdruckgießmaschine bei 80°C Prepolymer- und 35°C Vernetzertemperatur gemischt, die Mischung in ein auf 75°C temperiertes, verschließbares Formwerkzeug (z.B. mit der Federgeometrie gemäß Abb. 1) eingebracht und der Schaum bei 75°C für 15 min ausgehärtet.
Beim Entformen rissen die Federelemente im Bereich der Hinterschneidungen, wie z.B. der Biegelippe. Diese Risse waren irreversibel und konnten auch durch die anschließende thermische Nachhärtung der Formteile für 14 h bei 110°C nicht geschlossen werden. Aufgrund dieses Schadensbildes wurden die Formteilen nicht dynamisch geprüft und auch die Blöcke nicht auf die mechanischen Kenndaten untersucht.

Vergleichsbeispiel 3

1) Herstellung des NCO-gruppenhaltigen Prepolymeren

27,0 Gew.-Teile 4,4'-Diisocyanatodiphenylmethan (Lupranat® MES der BASF Aktiengesellschaft) wurden in einem Dreihalskolben unter Stickstoffatmosphäre aufgeschmolzen und bei 60°C unter Rühren mit einer Mischung aus 72,9 Gew.-Teile Polytetrahydrofuran 2000 (Hydroxylzahl von 56 mg KOH/g, Molekulargewicht 2000 g/mol) und 0,1 Gew.-Teile Trimethylolpropan versetzt. Die Mischung wurde zur vollständigen Umsetzung 1,5 Stunden auf 90°C erwärmt und anschließend abgekühlt. Es resultierte eine fast farblose Flüssigkeit mit einem NCO-Gehalt von 5,9 % und einer Viskosität von 1600 mPas bei 80°C.

2) Herstellung der Vernetzerkomponente:

s. Beispiel 2 (erfindungsgemäß)

3) Herstellung des zylindrischen Formkörpers

100 Gew.-Teile des Prepolymeren gemäß (1) wurden mit 3,30 Gew.-Teilen der Vernetzerkomponente gemäß (2) mit Hilfe einer Niederdruckgießmaschine bei 80°C Prepolymer- und 35°C Vernetzertemperatur gemischt, die Mischung in ein auf 75°C temperiertes, verschließbares Formwerkzeug (z.B. mit der Federgeometrie gemäß Abb. 1) eingebracht und der Schaum bei 75°C für 15 min ausgehärtet.
Wie bereits im Vergleichsbeispiel 2 beschrieben, wurden die Formteile mit Hinterschneidungen mit irreversiblen Rissen entformt. Weder die Blöcke noch die Formteile wurden auf ihre mechanischen bzw. dynamischen Eigenschaften untersucht.

Vergleichsbeispiel 4

1) Herstellung des NCO-gruppenhaltigen Prepolymeren

27,3 Gew.-Teile 4,4'-Diisocyanatodiphenylmethan (Lupranat® MES der BASF Aktiengesellschaft) wurden in einem Dreihalskolben unter Stickstoffatmosphäre aufgeschmolzen und bei 60°C unter Rühren mit einer Mischung aus 72,5 Gew.-Teile Polytetrahydrofuran 2000 (Hydroxylzahl von 56 mg KOH/g, Molekulargewicht 2000 g/mol)und 0,2 Gew.-Teile Trimethylolpropan versetzt. Die Mischung wurde zur vollständigen Umsetzung 1,5 Stunden auf 90°C erwärmt und anschließend abgekühlt. Es resultierte eine fast farblose Flüssigkeit mit einem NCO-Gehalt von 5,9 % und einer Viskosität von 1800 mPas bei 80°C.

2) Herstellung der Vernetzerkomponente:

s. Beispiel 2 (erfindungsgemäß)

3) Herstellung des zylindrischen Formkörpers

100 Gew.-Teile des Prepolymeren gemäß (1) wurden mit 3,30 Gew.-Teilen der Vernetzerkomponente gemäß (2) mit Hilfe einer Niederdruckgießmaschine bei 80°C Prepolymer- und 35°C Vernetzertemperatur gemischt, die Mischung in ein auf 75°C temperiertes, verschließbares Formwerkzeug (z.B. mit der Federgeometrie gemäß Abb. 1) eingebracht und der Schaum bei 75°C für 15 min ausgehärtet.
Wie bereits im Vergleichsbeispiel 2 beschrieben, wurden die Formteile mit Hinterschneidungen mit irreversiblen Rissen entformt. Weder die Blöcke noch die Formteile wurden auf ihre mechanischen bzw. dynamischen Eigenschaften untersucht.

Prüfbedingungen

Die Formkörper wurden unter den im Folgenden dargestellten Bedingungen auf ihre mechanischen und dynamischen Eigenschaften geprüft.
Die Glastemperatur wurde nach ISO 6721-7 an S3A-Zugstäben aus dem Fertigteil mit Hilfe eines Torsionsschwingers nach dem Prinzip der erzwungenen Schwingung ermittelt. Die Glasübergangstemperatur wurde beim Maximum des Verlustmoduls G" bestimmt. Dabei wurden die Proben auf -80°C abgekühlt, 5 min bei dieser Temperatur gehalten und anschließend mit einer Heizrate von 2 K/min auf 40°C erwärmt. Die Messfrequenz betrug 1 Hz.
Die statisch-mechanischen Eigenschaften, die Dichte der Prüfkörper betrug jeweils 0,5 g/cm$^3$, wurden anhand der Zugfestigkeit nach DIN EN ISO 845, der Bruchdehnung nach DIN EN ISO 1798, der Weiterreißfestigkeit nach DIN ISO 34-1 B(b)und dem Druckverformungsrest bei 80°C in Abwandlung zur DIN EN ISO 1798 unter Verwendung von 18 mm hohen Abstandsstücken und Prüfkörpern mit einer Grundfläche von 40 x 40 mm und einer Höhe von 30 ± 1 mm gemessen. Die um 40 % vorgespannten Prüfkörper werden 22 h bei 80°C gelagert und anschließend im vorgespannten Zustand für 2 h bei 23°C abkühlen gelassen. Die Berechnung des Druckverformungsrestes (DVR) erfolgte nach der Gleichung

$$DVR = [(H_0-H_2)/(H_0-H_1)]*100[\%]$$

in der bedeutet

$H_0$ die ursprüngliche Höhe des Prüfkörpers in mm,
$H_1$ die Höhe des Prüfkörpers in verformtem Zustand in mm,
$H_2$ die Höhe des Prüfkörpers nach der Entspannung in mm.

Die dynamisch-mechanischen Eigenschaften der Prüfkörper wurden anhand des Setzbetrages bestimmt. Die Prüfkörper bestanden aus einer zylindrischen Prüffeder (s. Abb.1). Die Prüfkörper wurden 100000 Lastwechsel mit einer Kraft von 6 kN und einer Frequenz von 1,2 Hz belastet. Die Ermittlung der Höhe $H_R$ zur Bestimmung des Setzbetrages nach der dynamischen Prüfung erfolgte nach Aufnahme der Kennlinie der Feder: $H_o$ ist die Ausgangshöhe. Der Formkörper wurde dreimal mit maximaler Kraft vorgedrückt. Dann wurde im 4. Cyclus die Kennlinie aufgenommen. Die Eindrückgeschwindigkeit betrug 50 mm/min. Nach 10 min wurde $H_1$ bestimmt, d.h. die des Bauteils nach Aufnahme der Kennlinie. Erst danach startet die dynamische Prüfung. Nach der dynamischen mechanischen Prüfung der Prüfkörper wurde der Setzbetrag (SB) nach der folgenden Gleichung ermittelt:

$$SB = [(H_0 - H_R)/H_0)] * 100 [\%]$$

in der bedeutet

$H_0$ die ursprüngliche Höhe des Prüfkörpers in mm,
$H_R$ Resthöhe des Prüfkörpers nach der dynamischen Prüfung, gemessen nach 24 Stunden Lagerung bei 23°C und 50 % Luftfeuchtigkeit.

Der Setzbetrag ist ein Maß für die bleibende Verformung des zelligen PU-Elastomeren während des Dauerschwingversuches. Je kleiner dieser Wert ist, desto höher ist die dynamische Leistungsfähigkeit des Materials. Die dynamischen Prüfungen erfolgten unter Ventilatorkühlung in einem klimatisierten Raum bei 23°C und 50 % relativer Luftfeuchtigkeit.

Die Kältekennlinie der zylindrischen Prüffeder (s. Abb.1) wurde ohne Vordrücken in einer Klimakammer bei -40 C aufgenommen. Dabei betrug die Eindrückgeschwindigkeit 50 mm/min. Je länger der bei der Kraft von 6 kN zurück gelegte Weg (=Einfederung), desto weicher und kälteflexibler ist die Feder.

Die Prüfung der Mikrobenbeständigkeit erfolgt in Anlehnung an ISO 846, Verf. D, Ausgabe 1997 an Federelementen (s. Abb. 1) mit Hilfe eines Eingrabtests. Dabei werden die zu untersuchenden Federelemente in einer Einspannvorrichtung um die halbe Ausgangshöhe vorgespannt und dann für 6 Wochen in biologisch aktiver Erde (Feuchtigkeit wird auf 60 % des maximalen Wasservermögens eingestellt) bei 28°C gelagert. Sofern keine substanzielle Veränderung (z.B. Rissbildung / Zersetzung) beobachtet wird, ist das Schaummaterial mikrobenbeständig.

In der folgenden Tabelle sind die Materialeigenschaften der erfindungsgemäßen zelligen Elastomere (Beispiel 1 bis 8) sowie der Vergleichsschäume (Vergleichsbeispiel 1 bis 3) zusammengefasst.

Die entsprechend der erfindungsgemäßen Beispiele 1 bis 8 hergestellten Formkörper (s. Abb. 1) ließen sich nach der einheitlichen Aushärtezeit von 15 Minuten rissfrei entformen. Demgegenüber rissen die Formkörper der Vergleichsbeispiele 2, 3 und 4 im Bereich von starken Hinterschneidungen, insbesondere im Bereich der Biegelippe. Da die gerissenen Formkörper nicht weiter untersucht wurden, sind für diese Beispiele keine Materialdaten angegeben.

Die erfindungsgemäßen zelligen Polyurethanelastomere weisen ein hohes mechanisches Eigenschaftsniveau (s. Zugfestigkeit, Bruchdehnung, Weiterreißfestigkeit und insbesondere der Druckverformungsrest bei 80°C) auf und zeichnen sich durch eine außerordentlich gute Hydrolysebeständigkeit in feuchter warmer Umgebung aus. Demgegenüber hydrolysiert der Schaum des Vergleichsbeispiels 1 mit Polyesterweichphase.

Weiterhin zeichnet sich das erfindungsgemäße Material durch eine hervorragende Mikrobenbeständigkeit aus.

Die Kälteflexibilität wurde sowohl an kompletten Federelementen durch Aufnahme einer Kraft-Weg-Kurve bei -40°C untersucht, als auch an Probekörpern, die aus den Bauteilen entnommen wurden. Je tiefer die Glastemperatur und je größer der Wert für die Einfederung ist, desto besser ist die Kälteflexibilität. Die erfindungsgemäßen Elastomerschäume weisen sowohl tiefe Glastemperaturen, als auch hohe Einfederungen auf.

Die dynamischen Materialeigenschaften wurden an dem in Abb. 1 gezeigten Federelement ermittelt. Dabei durchliefen alle erfindungsgemäßen Federelemente die dynamische Prüfung und ergaben geringe und damit vorteilhafte Setzbeträge.

Somit verbinden die erfindungsgemäßen Schäume bei vergleichsweise geringen Materialkosten ein hohes dynamisches Eigenschaftsniveau mit Hydrolyse- und Mikrobenbeständigkeit, was eine lange Materialnutzung auch unter ungünstigen Umgebungsbedingungen ermöglicht.

Tabelle 1: Materialeigenschaften der erfindungsgemäßen zelligen Polyurethanelastomere (Beispiel 2, 4, 5, 6) und der Vergleichsbeispiele 1 bis 3

|  | Einheit | 1 | 2 | 3 | 4 | 5 | Messung |
|---|---|---|---|---|---|---|---|
| Prepolymer NCO | [%] | 5,7 | 5,7 | 5,8 | 6,0 | 5,9 | |
| *Weichphasenpolyole:* Polytetrahydrofuran 2000 | [Gew.-%] | 80 | 75 | 90 | 84 | 86 | |
| Polytetrahydrofuran 1800 | | - | - | - | - | - | |
| Polytetrahydrofuran 1000 | | 20 | 19 | 10 | 9 | 9 | |

(fortgesetzt)

| | Einheit | 1 | 2 | 3 | 4 | 5 | Messung |
|---|---|---|---|---|---|---|---|
| Prepolymer NCO | [%] | 5,7 | 5,7 | 5,8 | 6,0 | 5,9 | |
| Polypropylenoxid (M: 2000) | | - | - | - | - | - | |
| Polyetheralkohol (M: 5200) | | - | 6 | - | 7 | 5 | |
| Poly(ethylenbutylen-adipat) | | - | - | - | - | - | |
| Beschädigungen des Formkörpers (s. Abb. 1) | | Keine | Keine | Keine | Keine | Keine | |
| **Statisch-mechanische Eigenschaften:** | | | | | | | |
| Bauteildichte | [kg/m$^3$] | 420 | 440 | 440 | 440 | | DIN EN ISO 845 |
| Zugfestigkeit | [MPa] | 5 | 5 | 5 | 5 | | DIN EN ISO 1798 |
| Bruchdehnung | [%] | 480 | 460 | 460 | 400 | | DIN EN ISO 1798 |
| Weiterreißfestigkeit | [N/mm] | 17 | 16 | 18 | 16 | | DIN ISO 34-1B(b) |
| Setzbetrag (40% Verformung, 22h 80°C+2 h 23 °C) | [%] | 20 | 25 | 23 | 23 | | DIN EN ISO 1856 |
| Setzbetrag (40% Verformung, 22h 70 °C) | [%] | 5 | 5 | 5 | 5 | 4 | DIN EN ISO 1856 |
| **Zugfestigkeitsabnahme in feuchter warmer Umgebung (Hydrolysebeständigkeit):** | | | | | | | |
| Relative Zugfestig-keitsabnahme in feuchter warmer Umgebung[***] nach Lagerzeit von mehreren Tagen (d) | [%] 0 d | 100 | 100 | | | 100 | DIN EN ISO 1798 |
| | 7 d | 112 | 96 | | | 98 | |
| | 14 d | 124 | 93 | | | 95 | |
| | 21 d | 99 | 90 | | | 93 | |
| | 42 d | 91 | 77 | | | 73 | |
| | 56 d | 85 | 71 | | | 64 | |
| | 70 d | 76 | 70 | | | 64 | |
| | 80 d | 69 | 70 | | | 58 | |
| Mikrobenbeständigkeit: (+) beständig / (-) nicht beständig | | (+) | (+) | (+) | (+) | (+) | Anlehnung an ISO 846; s. u. Prüfbedingungen |
| **Kälteflexibilität:** Glastemperatur (Max. Verlustmoduls G"max) | [°C] | -61 | -62 | | | | ISO 6721-7 |
| Einfederung (Feder s. Abb. 1) bei 6 kN bei -40 °C | [mm] | 55 | 55 | 54 | 54 | 53 | s. u. Prüfbedingungen |
| **Dynamisch-mechanische Eigenschaften:** Setzbetrag[****] einer Feder (s. Abb. 1) | [%] | 11 | 9 | 10 | 8 | 11 | Prüfbedingung [****] |

(fortgesetzt)

| | Einheit | 6 | 7 | 8 | Vergl. 1 | Vergl. 2 | Vergl. 3 | |
|---|---|---|---|---|---|---|---|---|
| **Dynamisch-mechanische Eigenschaften:** | | | | | | | | |
| Prepolymer NCO | [%] | 5,7 | 5,8 | 5,8 | 6,0 | 5,8 | 5,9 | |
| *Weichphasenpolyole:* | | | | | | | | |
| Polytetrahydrofuran M~2000 | [Gew.-%] | 66 | 75 | 74 | - | 100 | 100 | |
| Polytetrahydrofuran M~1800 | | 9 | - | - | - | - | - | |
| Polytetrahydrofuran M~1000 | | 19 | - | - | - | - | - | |
| Polypropylenoxid M~2000 | | - | 19 | 18 | - | - | - | |
| Polyetheralkohol M-5200 | | 6 | 6 | 8 | - | - | - | |
| Poly(ethylenbutylen-adipat) | | - | - | - | 100 | - | - | |
| Beschädigungen am entformten Federelement (s. Abb. 1) | | Keine | Keine | Keine | Keine | <u>Risse</u> | <u>Risse</u> | |
| **Statisch-mechanische Eigenschaften:** | | | | | | | | |
| Bauteildichte | [kg/m$^3$] | 440 | | 380 | 490 | n.m.[**] | n.m.[**] | DIN EN ISO 845 |
| Zugfestigkeit | [MPa] | 4 | | 3 | 3 | n.m.[**] | n.m.[**] | DIN EN ISO 1798 |
| Bruchdehnung | [%] | 510 | | 400 | 500 | n.m.[**] | n.m.[**] | DIN EN ISO 1798 |
| Weiterreißfestigkeit | [N/mm] | 17 | | 13 | 16 | n.m.[**] | n.m.[**] | DIN ISO 34-1 B (b) |
| Setzbetrag (40% Verformung, 22h 80°C+2 h 23°C) | [%] | 28 | | 12 | 35 | n.m.[**] | n.m.[**] | |
| Setzbetrag (40% Verformung, 22h 70°C+2 h 23°C) | [%] | n.m.[**] | | 3 | 6 | n.m.[**] | n.m.[**] | DIN EN ISO 1856 |
| **Zugfestigkeitsabnahme in feuchter warmer Umgebung (Hydrolysebeständigkeit):** | | | | | | | | |
| Relative Zugfestig-keitsabnahme in feuchter warmer Umgebung[***] nach Lagerzeit von mehreren Tagen (d) | [%] 0 d | | | | 100 | n.m.[**] | n.m.[**] | DIN EN ISO 1798 |
| | 7 d | | | | 82 | n.m.[**] | n.m.[**] | |
| | 14 d | | | | 55 | n.m.[**] | n.m.[**] | |
| | 21 d | | | | 39 | n.m.[**] | n.m.[**] | |
| | 42 d | | | | < 10 | n.m.[**] | n.m.[**] | |
| | 56 d | | | | destroyed | n.m.[**] | n.m.[**] | |
| | 70 d | | | | destroyed | n.m.[**] | n.m.[**] | |
| | 80 d | | | | destroyed | n.m.[**] | n.m.[**] | |
| Mikrobenbeständigkeit: (+) beständig / (-) nicht beständig | | (+) | (+) | (+) | (-) | n.m.[**] | n.m.[**] | Anlehnung an ISO 846; s. u. Prüfbedingungen |

# EP 1 861 444 B2

(fortgesetzt)

| Kälteflexibilität: Glastemperatur (Max. Verlustmoduls G"max) | [°C] | | | | -32 | n.m.[**] | n.m.[**] | ISO 6721-7 |
|---|---|---|---|---|---|---|---|---|
| Einfederung (Feder s. Abb. 1) bei 6 kN bei -40 °C | | 54 | 53 | 54 | 53 | n.m.[**] | n.m.[**] | |
| Dynamisch-mechanische Eigenschaften: Setzbetrag[****] einer Feder (s. Abb. 1) | [%] | | | 9 | 11 | n.m.[**] | n.m.[**] | Prüfbedingung [****] |

**) n.m. = nicht gemessen ***) Lagerung von Zugfestigkeitsprobekörpern in 80°C temperiertem demineralisiertem Wasser für einen Zeitraum von bis zu 80 Tagen. Entnommene Probekörper wurden 30 min bei 23°C abgekühlt und anschließend die Zugfestigkeit gemäß DIN EN ISO 1798 bestimmt.

****) Dynamische Prüfbedingungen: Last 6 kN; Frequenz 1,2 Hz; Lastwechselzahl 100000 Zyklen; Ventilator kühlung; der prozentuale Setzbetrag (SB) ergibt sich aus dem prozentualen Verhältnis der Resthöhe der Feder nach der Prüfung ($H_R$) zur Federausgangshöhe $H_0$ vor der Prüfung: SB = [($H_0$-$H_R$)/$H_0$)]*100[%]

## Patentansprüche

**1.** Prepolymer mit einem NCO-Gehalt kleiner 10 % basierend auf der Umsetzung von (a) Diisocyanat mit (b) Polyetheralkohol, **dadurch gekennzeichnet, dass** das (b) Polyetheralkohol enthält (b1) sowie (b2) und (b3) mit den folgenden Bedeutungen für (b1), (b2) und (b3):

(b1) Polytetrahydrofuran mit einem Molekulargewicht zwischen 1800 und 2100 g/mol sowie
(b2) Polyetheralkohol mit einem Molekulargewicht zwischen 500 und 7000 g/mol auf der Basis von Ethylenoxid und/oder Propylenoxid und
(b3) Polytetrahydrofuran mit einem Molekulargewicht zwischen 800 und 1200 g/mol.
wobei
(b) Polyetheralkohol (b1) und (b2) enthält und der Polyetheralkohol (b2) eine Hydroxylzahl kleiner 500 mg KOH/g aufweist
der Polyetheralkohol (b2) auf Ethylenoxid und/oder Propylenoxid sowie Glycerin und/oder Trimethylolpropan als Startsubstanz basiert.

**2.** Prepolymer gemäß Anspruch 1, **dadurch gekennzeichnet, dass** das Gewichtsverhältnis von (b1) zur Summe von (b2) und (b3), zwischen 11:1 und 2:1 beträgt.

**3.** Prepolymer gemäß Anspruch 1, **dadurch gekennzeichnet, dass** das Prepolymer Allophanatgruppen enthält.

**4.** Prepolymer gemäß Anspruch 1, **dadurch gekennzeichnet, dass** das Prepolymer basiert auf der Umsetzung von (a) Diisocyanat mit Polyetheralkoholen (b) mit einem Molekulargewicht zwischen 500 g/mol und 7000 g/mol und wobei zusätzlich zu Polyetheralkohol (b) als gegenüber Isocyanaten reaktive Verbindungen (b4) eingesetzt werden, die eine nominelle Funktionalität von 3 und ein Molekulargewicht kleiner 500 g/mol aufweisen.

**5.** Verfahren zur Herstellung von zelligen Polyisocyanat-Polyadditionsprodukten, in dem man durch Umsetzung von (a) Diisocyanat mit (b) Polyetheralkohol ein Isocyanatgruppen aufweisendes Prepolymer mit einem NCO-Gehalt kleiner 10 % herstellt und dieses Prepolymer anschließend in einer Form mit einer Vernetzerkomponente enthaltend (e) Wasser sowie gegebenenfalls (d) sulfatierte Fettsäureester umsetzt, **dadurch gekennzeichnet, dass** man als (b) Polyetheralkohol einsetzt (b1) sowie (b2) und (b3) mit den folgenden Bedeutungen für (b1), (b2) und (b3):

(b1) Polytetrahydrofuran mit einem Molekulargewicht zwischen 1800 und 2100 g/mol sowie
(b2) Polyetheralkohol mit einem Molekulargewicht zwischen 500 und 7000 g/mol auf der Basis von Ethylenoxid und/oder Propylenoxid und
(b3) Polytetrahydrofuran mit einem Molekulargewicht zwischen 800 und 1200 g/mol.

wobei

(b) Polyetheralkohol (b1) und (b2) enthält und der Polyetheralkohol (b2) eine Hydroxylzahl kleiner 500 mg KOH/g aufweist

der Polyetheralkohol (b2) auf Ethylenoxid und/oder Propylenoxid sowie Glycerin und/oder Trimethylolpropan als Startsubstanz basiert.

6. Verfahren gemäß Anspruch 5, **dadurch gekennzeichnet, dass** man ein Prepolymer gemäß einem der Ansprüche 2 bis 4 einsetzt.

7. Verfahren gemäß Anspruch 5, **dadurch gekennzeichnet, dass** in der Vernetzerkomponente Katalysatoren (f) sowie gegebenenfalls (c) Polysiloxane, (g) Treibmittel und/oder Hilfsstoffe (h) enthalten sind.

8. Verfahren gemäß Anspruch 5, **dadurch gekennzeichnet, dass** in der Vernetzerkomponente Zinn-Verbindungen enthalten sind.

9. Verfahren gemäß Anspruch 8, **dadurch gekennzeichnet, dass** in der Vernetzerkomponente zusätzlich zu den Zinn-Verbindungen aminische Katalysatoren enthalten sind.

10. Zellige Polyisocyanat-Polyadditionsprodukte erhältlich durch ein Verfahren gemäß einem der Ansprüche 5 bis 9.

11. Zellige Polyisocyanat-Polyadditionsprodukte gemäß Anspruch 10, **dadurch gekennzeichnet, dass** die zelligen Polyisocyanat-Polyadditionsprodukte eine Dichte nach DIN EN ISO 845 zwischen 200 und 800 kg/m$^3$, eine Zugfestigkeit nach DIN EN ISO 1798 von $\geq$ 2,0 N/mm$^2$, eine Bruchdehnung nach DIN EN ISO 1798 von $\geq$ 200 % und eine Weiterreißfestigkeit nach DIN ISO 34-1 B (b) von $\geq$ 8 N/mm aufweisen.

**Claims**

1. A prepolymer having an NCO content of less than 10%, based on the reaction of (a) diisocyanate with (b) polyether alcohol, wherein the (b) polyether alcohol comprises (b1) and (b2) and (b3) with the following meanings for (b1), (b2) and (b3):

   (b1) polytetrahydrofuran having a molecular weight of from 1800 to 2100 g/mol and
   (b2) polyether alcohol having a molecular weight of from 500 to 7000 g/mol based on ethylene oxide and/or propylene oxide, and
   (b3) polytetrahydrofuran having a molecular weight of from 800 to 1200 g/mol,
   (b) polyether alcohol comprising (b1) and (b2), and the polyether alcohol (b2) having a hydroxyl number of less than 500 mg KOH/g, the polyether alcohol (b2) being based on ethylene oxide and/or propylene oxide and glycerol and/or trimethylolpropane as an initiator.

2. The prepolymer according to claim 1, wherein the weight ratio of (b1) to the sum of (b2) and (b3) is from 11:1 to 2:1.

3. The prepolymer according to claim 1, which comprises allophanate groups.

4. The prepolymer according to claim 1, which is based on the reaction of (a) diisocyanate with polyether alcohols (b) having a molecular weight of from 500 g/mol to 7000 g/mol, compounds (b4) which have a nominal functionality of 3 and a molecular weight of less than 500 g/mol being used in addition to polyether alcohol (b) as compounds reactive toward isocyanates.

5. A process for the preparation of cellular polyisocyanate polyadducts, in which a prepolymer having isocyanate groups and an NCO content of less than 10% is prepared by reacting (a) diisocyanate with (b) polyether alcohol, and this prepolymer is then reacted in a mold with a crosslinking component comprising (e) water and optionally, (d) sulfated fatty acid esters, wherein (b1) and (b2) and (b3) with the following meanings for (b1), (b2) and (b3) are used as (b) polyether alcohol:

   (b1) polytetrahydrofuran having a molecular weight of from 1800 to 2100 g/mol and
   (b2) polyether alcohol having a molecular weight of from 500 to 7000 g/mol, based on ethylene oxide and/or propylene oxide, and

(b3) polytetrahydrofuran having a molecular weight of from 800 to 1200 g/mol,
(b) polyether alcohol comprising (b1) and (b2), and the polyether alcohol (b2) having a hydroxyl number of less than 500 mg KOH/g, the polyether alcohol (b2) being based on ethylene oxide and/or propylene oxide and glycerol and/or trimethylolpropane as an initiator.

6. The process according to claim 5, wherein a polymer as claimed in any of claims 2 to 4 is used.

7. The process according to claim 5, wherein the crosslinking component comprises catalysts (f) and, optionally, (c) polysiloxanes, (g) blowing agents and/or assistants (h).

8. The process according to claim 5, wherein the crosslinking component comprises tin compounds.

9. The process according to claim 8, wherein the crosslinking component comprises amine catalysts in addition to the tin compounds.

10. A cellular polyisocyanate polyadduct obtainable by a process according to any of claims 5 to 9.

11. The cellular polyisocyanate polyadduct according to claim 10, which has a density, according to DIN EN ISO 845, of from 200 to 800 kg/m$^3$, a tensile strength, according to DIN EN ISO 1798, of $\geq$ 2.0 N/mm$^2$, an elongation at break, according to DIN EN ISO 1798, of $\geq$ 200% and a tear propagation resistance, according to DIN ISO 34-1 B (b), of $\geq$ 8 N/mm.

**Revendications**

1. Prépolymère présentant une teneur en NCO inférieure à 10% basée sur la transformation de (a) un diisocyanate avec (b) un polyétheralcool, **caractérisé en ce que** (b) le polyétheralcool contient (b1) ainsi que (b2) et (b3), avec les significations suivantes pour (b1), (b2) et (b3) :

(b1) un polytétrahydrofuranne présentant un poids moléculaire entre 1800 g/mole et 2100 g/mole, ainsi que
(b2) un polyétheralcool présentant un poids moléculaire entre 500 g/mole et 7000 g/mole à base d'oxyde d'éthylène et/ou d'oxyde de propylène, et
(b3) un polytétrahydrofuranne présentant un poids moléculaire entre 800 g/mole et 1200 g/mole,
où
(b) un polyétheralcool contient (b1) et (b2) et le polyétheralcool (b2) présente un indice d'hydroxyle inférieur à 500 mg de KOH/g
le polyétheralcool (b2) est à base d'oxyde d'éthylène et/ou d'oxyde de propylène ainsi que de glycérol et/ou de triméthylolpropane comme substance de départ.

2. Prépolymère selon la revendication 1, **caractérisé en ce que** le rapport pondéral de (b1) à la somme de (b2) et (b3) est compris entre 11:1 et 2:1.

3. Prépolymère selon la revendication 1, **caractérisé en ce que** le prépolymère contient des groupes allophanate.

4. Prépolymère selon la revendication 1, **caractérisé en ce que** le prépolymère est à base de la transformation de (a) un diisocyanate avec des polyétheralcools (b) présentant un poids moléculaire entre 500 g/mole et 7000 g/mole et où on utilise, en plus du polyétheralcool (b), (b4) comme composés réactifs par rapport aux isocyanates, qui présentent une fonctionnalité nominale de 3 et un poids moléculaire inférieur à 500 g/mole.

5. Procédé pour la préparation de produits de polyaddition de polyisocyanate cellulaires, dans lequel on prépare, par transformation de (a) un diisocyanate avec (b) un polyétheralcool un prépolymère présentant des groupes isocyanate présentant une teneur en NCO inférieure à 10% et on transforme ensuite ce prépolymère dans un moule avec un composant de réticulation contenant (e) de l'eau ainsi que (d) des esters sulfatés d'acide gras, **caractérisé en ce qu'**on utilise comme (b) un polyétheralcool (b1) ainsi que (b2) et (b3), avec les significations suivantes pour (b1), (b2) et (b3) :

(b1) un polytétrahydrofuranne présentant un poids moléculaire entre 1800 g/mole et 2100 g/mole, ainsi que
(b2) un polyétheralcool présentant un poids moléculaire entre 500 g/mole et 7000 g/mole à base d'oxyde d'éthylène et/ou d'oxyde de propylène, et

(b3) un polytétrahydrofuranne présentant un poids moléculaire entre 800 g/mole et 1200 g/mole,

où

(b) un polyétheralcool contient (b1) et (b2) et le polyétheralcool (b2) présente un indice d'hydroxyle inférieur à 500 mg de KOH/g

le polyétheralcool (b2) est à base d'oxyde d'éthylène et/ou d'oxyde de propylène ainsi que de glycérol et/ou de triméthylolpropane comme substance de départ.

6. Procédé selon la revendication 5, **caractérisé en ce qu'**on utilise un prépolymère selon l'une quelconque des revendications 2 à 4.

7. Procédé selon la revendication 5, **caractérisé en ce que** le composant de réticulation contient des catalyseurs (f) ainsi que le cas échéant (c) des polysiloxanes, (g) des agents gonflants et/ou des adjuvants (h).

8. Procédé selon la revendication 5, **caractérisé en ce que** le composant de réticulation contient des composés à base d'étain.

9. Procédé selon la revendication 8, **caractérisé en ce que** le composant de réticulation contient, en plus des composés à base d'étain, des catalyseurs de type amine.

10. Produits de polyaddition de polyisocyanate cellulaires, pouvant être obtenus par un procédé selon l'une quelconque des revendications 5 à 9.

11. Produits de polyaddition de polyisocyanate cellulaire selon la revendication 10, **caractérisé en ce que** les produits de polyaddition de polyisocyanate cellulaires présentent une densité selon la norme DIN EN ISO 845 entre 200 et 800 kg/m$^3$, une résistance à la traction selon la norme DIN EN ISO 1798 $\geq$ 2,0 N/mm$^2$, un allongement à la rupture selon la norme DIN EN ISO 1798 $\geq$ 200% et une résistance à la propagation d'une déchirure selon la norme DIN ISO 34-1 B (b) $\geq$ 8 N/mm.

**IN DER BESCHREIBUNG AUFGEFÜHRTE DOKUMENTE**

**In der Beschreibung aufgeführte Patentdokumente**

- WO 2001018086 A1
- DE 3613964 A
- DE 3613964
- DE 4438143 C

**In der Beschreibung aufgeführte Nicht-Patentliteratur**

- **H. RÖHR.** Integralschaumstoffe. Carl Hanser-Verlag, 1975
- **D.J. PREPELKA ; J.L. WHARTON.** *Journal of Cellular Plastics,* Marz 1975, 87-98
- **U. KNIPP.** *Journal of Cellular Plastics,* Marz 1973, 76-84